(19) **Europäisches Patentamt**
**European Patent Office**
**Office européen des brevets**

(11) **EP 4 770 172 A1**

(12) **EUROPEAN PATENT APPLICATION**
published in accordance with Art. 153(4) EPC

(43) Date of publication:
**01.07.2026  Bulletin 2026/27**

(21) Application number: **23952568.6**

(22) Date of filing: **20.09.2023**

(51) International Patent Classification (IPC):
**H04W 24/02** $^{(2009.01)}$

(52) Cooperative Patent Classification (CPC):
**H04W 24/02**

(86) International application number:
**PCT/CN2023/120013**

(87) International publication number:
**WO 2025/059907 (27.03.2025 Gazette 2025/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.**
**Shenzhen, Guangdong 518129 (CN)**

(72) Inventors:
• **WANG, Jian**
**Shenzhen Guangdong 518129 (CN)**
• **LI, Rong**
**Shenzhen Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **COMMUNICATION METHOD AND RELATED DEVICE**

(57)    This application provides a communication method and a related device, so that computational power of a communication node can be applied to an artificial intelligence (artificial intelligence, AI) model processing process in an AI learning system, and AI model processing based on AI data feature matching can be implemented. In the method, a first node receives first information, where the first information indicates a first AI model; and the first node processes the first AI model based on local data to obtain a second AI model, where an AI data feature of the local data meets an AI data feature corresponding to a processing requirement of the first AI model.

First node

Second node

S301: First information, where the first information indicates a first AI model

S302: Process the first AI model based on local data to obtain a second AI model

FIG. 3

Description

## TECHNICAL FIELD

This application relates to the communication field, and in particular, to a communication method and a related device.

## BACKGROUND

Wireless communication may be transmission communication performed between two or more communication nodes without propagation through a conductor or a cable. The communication node usually includes a network device and a terminal device.

Currently, in a wireless communication system, a communication node usually has a signal receiving and sending capability and a computational capability. A network device having a computational capability is used as an example. The computational capability of the network device is mainly to provide computational power support for a signal receiving and sending capability (for example, perform computing on a time domain resource, a frequency domain resource, and the like that carry a signal), to implement communication between the network device and another communication node.

However, in a communication network, in addition to having the computational capability of providing computational power support for the foregoing communication task, the communication node may further have a surplus computational capability. Therefore, how to use these computational capabilities is an urgent technical problem to be resolved.

## SUMMARY

This application provides a communication method and a related device, so that computational power of a communication node can be applied to an artificial intelligence (artificial intelligence, AI) model processing process in an AI learning system, and AI model processing based on AI data feature matching can be implemented.

According to a first aspect of this application, a communication method is provided. The method is performed by a first node, or the method is performed by a part of components (for example, a processor, a chip, or a chip system) in the first node, or the method may be implemented by a logical module or software that can implement all or a part of functions of the first node. In the first aspect and a possible implementation of the first aspect, that the method is performed by the first node is used as an example for description. For example, the first node may be a communication node like a terminal device or a network device in a communication system. In the method, the first node receives first information, where the first information indicates a first AI model; and the first node processes the first AI model based on local data to obtain a second AI model, where an AI data feature of the local data meets an AI data feature corresponding to a processing requirement of the first AI model.

Based on the foregoing technical solution, the first information received by the first node indicates the first AI model. Then, the first node processes the first AI model based on the local data, to obtain the second AI model. The AI data feature of the local data of the first node meets the AI data feature corresponding to the processing requirement of the first AI model. In other words, the first node is used as a communication node in the communication system, and the AI data feature corresponding to the processing requirement of the first AI model processed by the first node matches the AI data feature of the local data of the first node. Therefore, when the communication node in the communication system is used as a node participating in AI model processing, computational power of the communication node can be applied to an AI model processing process in an AI learning system, to implement the AI model processing process in a communication network.

In addition, the AI data feature of the local data of the first node meets the AI data feature corresponding to the processing requirement of the first AI model processed by the first node, so that the first node can process an AI model that matches the AI data feature of the local data. Correspondingly, the AI model can also be processed by a node that meets the processing requirement, thereby implementing AI model processing based on AI data feature matching.

In this application, the AI model may be replaced with a neural network, an AI neural network, a neural network model, an AI neural network model, a machine learning model, or the like.

It should be understood that, that the first information indicates the first AI model may be understood as that the first information includes an index of the first AI model, so that a receiver of the first information can obtain the first AI model based on the index, or that the first information includes the first AI model, so that a receiver of the first information can obtain the first AI model from the first information.

It should be understood that the AI model in this application may be applied to an AI task. In other words, an execution process of the AI task includes processing performed by the communication node on one or more AI models.

The AI task may be a task that requires two or more communication nodes to participate in processing, and the communication node includes a terminal device and/or a network device. For example, the AI task may include a federated learning (federated learning, FL) task, a distributed training task, a distributed learning task, or the like.

Optionally, AI data may be AI-related data, and an AI data feature may indicate a feature (or a characteristic, a trait, an attribute, or a property) of the AI-related data, or the like. For example, the AI data feature may include at least one of the following: an AI task to which the AI data is applied, an object to which the AI data belongs, geographical location information of collecting the AI data, time information of collecting the AI data, and a quantity of samples of the AI data.

It should be noted that, that the AI data feature of the local data of the first node meets the AI data feature corresponding to the processing requirement of the first AI model may be understood as at least one of the following: The AI data feature corresponding to the processing requirement of the first AI model is a subset of the AI data feature of the local data of the first node, the AI data feature of the local data of the first node is greater than or equal to the AI data feature corresponding to the processing requirement of the first AI model, the AI data feature of the local data of the first node includes at least the AI data feature corresponding to the processing requirement of the first AI model, and the AI data feature of the local data of the first node matches/corresponds to the AI data feature corresponding to the processing requirement of the first AI model.

In a possible implementation of the first aspect, that the first node receives the first information includes: The first node receives the first information based on second information, where the second information indicates transmission information of the AI model.

Based on the foregoing technical solution, the first node may receive, based on the second information, the first information indicating the first AI model, where the second information indicates the transmission information of the AI model, so that the first node can implement transmission of the AI model based on the second information.

Optionally, the transmission information includes at least one of the following:

a node identifier of a node that sends the first AI model;
a node identifier of a node that receives the second AI model;
an identifier of an AI task corresponding to the first AI model and/or an identifier of an AI task corresponding to the second AI model;
an identifier of the first AI model;
an identifier of the second AI model;
a processing manner of processing the first AI model being at least one of training, distillation, and fusion;
a processing manner of processing the second AI model being at least one of training, distillation, and fusion; and
indication information indicating a non-relay node.

In a possible implementation of the first aspect, the method further includes: The first node receives the second information.

Based on the foregoing technical solution, the first node may obtain the second information by receiving the second information. To be specific, the first node can determine the second information by using a scheduling indication of another node (for example, a central node), to reduce implementation complexity of the first node.

Optionally, the another node can be used as a central node (or a control node, a management node, or the like) in a learning architecture in which the first node is located, so that the solution can be adapted to a learning architecture having a central node (or a control node, a management node, or the like).

In a possible implementation of the first aspect, the method further includes: The first node receives one or more pieces of neighbor node information, where the one or more pieces of neighbor node information indicate AI data features of one or more neighbor nodes; and the first node determines the second information based on the one or more pieces of neighbor node information.

Based on the foregoing technical solution, the first node may receive the one or more pieces of neighbor node information indicating the AI data features of the one or more neighbor nodes, and determine the second information based on the one or more pieces of neighbor node information, that is, the first node can determine the second information locally based on the received (or collected) one or more pieces of neighbor node information.

Optionally, the first node can determine the transmission information of the AI model locally, so that the solution can adapt to a decentralized learning architecture.

In a possible implementation of the first aspect, the method further includes: The first node sends third information based on the second information, where the third information indicates the second AI model.

Based on the foregoing technical solution, after the first node processes the first AI model based on the local data to obtain the second AI model, the first node may further send, based on the second information, the third information indicating the second AI model, so that a receiver of the third information can further process the second AI model.

In a possible implementation of the first aspect, the method further includes: The first node sends fourth information and/or fifth information, where the fourth information indicates the AI data feature corresponding to the processing requirement of the first AI model, and the fifth information indicates an AI data feature corresponding to a processing requirement of the second AI model.

Optionally, the transmission information may further include the fourth information and/or the fifth information.

Based on the foregoing technical solution, the first node may further send the fourth information indicating the AI data feature corresponding to the processing requirement of the first AI model, and/or the first node may further send the fifth information indicating the AI data feature corresponding to the processing requirement of the second AI model. In this way, a receiver of the fourth information and/or the fifth information can determine an AI data feature corresponding to a processing requirement of an AI model. Subsequently, the receiver can determine, based on the fourth information and/or the fifth information, whether an AI data feature of local data of the receiver meets the AI data feature of the processing requirement of the AI model, and further determine whether to process the second AI model.

In a possible implementation of the first aspect, before the first node processes the first AI model based on the local data, the method further includes: The first node receives the fourth information, where the fourth information indicates the AI data feature corresponding to the processing requirement of the first AI model.

Based on the foregoing technical solution, the first node may further receive the fourth information indicating the AI data feature corresponding to the processing requirement of the first AI model, so that the first node can determine, based on the fourth information, that the AI data feature of the local data of the first node meets the AI data feature of the processing requirement of the AI model, and further determine to process the second AI model.

In a possible implementation of the first aspect, the method further includes: The first node sends indication information indicating the AI data feature of the local data.

Based on the foregoing technical solution, the first node may further send the indication information indicating the AI data feature of the local data of the first node, so that a receiver of the indication information can determine the AI data feature of the local data of the first node, and the receiver may use the indication information as one of determining bases for the transmission information of the AI model.

Optionally, that the indication information sent by the first node indicates the AI data feature of the local data of the first node may be understood as that the indication information indicates node information of the first node. In other words, the indication information sent by the first node may be referred to as the node information of the first node.

In a possible implementation of the first aspect, that the first node processes the first AI model based on the local data to obtain the second AI model includes: The first node performs at least one of training, distillation, and fusion on the first AI model based on the local data, to obtain the second AI model.

Based on the foregoing technical solution, the first node may perform the at least one of the foregoing processing on the first AI model based on the local data, to improve flexibility of solution implementation.

According to a second aspect of this application, a communication method is provided. The method is performed by a central node, or the method is performed by a part of components (for example, a processor, a chip, or a chip system) in the central node, or the method may be implemented by a logical module or software that can implement all or a part of functions of the central node. In the second aspect and a possible implementation of the second aspect, that the method is performed by the central node is used as an example for description. The central node may be replaced with a control node, a management node, or the like. In the method, the central node receives one or more pieces of node information, where the one or more pieces of node information indicate AI data features of one or more nodes, and the one or more pieces of node information are used to determine transmission information of an AI model; and the central node sends second information, where the second information indicates the transmission information.

Based on the foregoing technical solution, the one or more pieces of node information received by the central node indicate the AI data features of the one or more nodes, and the central node can determine the transmission information of the AI model based on the one or more pieces of node information. Then, the central node may send the second information indicating the transmission information, so that a receiver of the second information can transmit the AI model based on the second information. Therefore, when a communication node in the communication system is used as a node participating in AI model processing, computational power of the communication node can be applied to an AI model processing process in an AI learning system, to implement the AI model processing process in a communication network.

In addition, the basis for determining the transmission information of the AI model by the central node includes the AI data features of the one or more nodes, so that the communication node can process an AI model that matches the AI data feature of the local data. Correspondingly, the AI model can also be processed by a node that meets the processing requirement, thereby implementing AI model processing based on AI data feature matching.

It should be understood that the central node may determine, based on the AI data features of the one or more nodes, the transmission information for transmitting the AI model by the one or more nodes, that is, the second information sent by the central node may indicate the transmission information for transmitting the AI model by the one or more nodes. Alternatively, the central node may send one or more pieces of second information, where the one or more pieces of second information respectively indicate transmission information for transmitting the AI model by the one or more nodes. Correspondingly, the receiver of the second information may include the one or more nodes (for example, the one or more nodes may include a first node).

Optionally, the transmission information includes at least one of the following:

a node identifier of a node that sends a first AI model;
a node identifier of a node that receives a second AI model;
an identifier of an AI task corresponding to the first AI model and/or an identifier of an AI task corresponding to the second AI model;
an identifier of the first AI model;
an identifier of the second AI model;
a processing manner of processing the first AI model being at least one of training, distillation, and fusion;
a processing manner of processing the second AI model being at least one of training, distillation, and fusion; and
indication information indicating a non-relay node.

Optionally, the AI data feature includes at least one of the following: an AI task to which AI data is applied, an object to which the AI data belongs, geographical location information of collecting the AI data, time information of collecting the AI data, and a quantity of samples of the AI data.

According to a third aspect of this application, a communication apparatus is provided. The apparatus is a first node, or the apparatus is a part of components (for example, a processor, a chip, or a chip system) in the first node, or the apparatus may be a logical module or software that can implement all or a part of functions of the first node. In the third aspect and a possible implementation of the third aspect, that the communication apparatus is the first node is used as an example for description. The first node may be a terminal device or a network device.

The apparatus includes a processing unit and a transceiver unit. The transceiver unit is configured to receive first information, where the first information indicates a first artificial intelligence AI model; and the processing unit is configured to process the first AI model based on local data to obtain a second AI model, where an AI data feature of the local data meets an AI data feature corresponding to a processing requirement of the first AI model.

In a possible implementation of the third aspect, that the transceiver unit is configured to receive the first information includes: The transceiver unit is specifically configured to receive the first information based on second information, where the second information indicates transmission information of an AI model.

In a possible implementation of the third aspect, the transceiver unit is further configured to receive the second information.

In a possible implementation of the third aspect, the transceiver unit is further configured to receive one or more pieces of neighbor node information, where the one or more pieces of neighbor node information indicate AI data features of one or more neighbor nodes; and the processing unit is further configured to determine the second information based on the one or more pieces of neighbor node information.

In a possible implementation of the third aspect, the transceiver unit is further configured to send third information based on the second information, and the third information indicates the second AI model.

In a possible implementation of the third aspect, the transceiver unit is further configured to send fourth information and/or fifth information, the fourth information indicates the AI data feature corresponding to the processing requirement of the first AI model, and the fifth information indicates an AI data feature corresponding to a processing requirement of the second AI model.

In a possible implementation of the third aspect, the transmission information includes at least one of the following:

a node identifier of a node that sends the first AI model;
a node identifier of a node that receives the second AI model;
an identifier of an AI task corresponding to the first AI model and/or an identifier of an AI task corresponding to the second AI model;
an identifier of the first AI model;
an identifier of the second AI model;
a processing manner of processing the first AI model being at least one of training, distillation, and fusion;
a processing manner of processing the second AI model being at least one of training, distillation, and fusion; and
indication information indicating a non-relay node.

In a possible implementation of the third aspect, the transceiver unit is further configured to receive the fourth information, and the fourth information indicates the AI data feature corresponding to the processing requirement of the first AI model.

In a possible implementation of the third aspect, the AI data feature includes at least one of the following: an AI task to which AI data is applied, an object to which the AI data belongs, geographical location information of collecting the AI data, time information of collecting the AI data, and a quantity of samples of the AI data.

In a possible implementation of the third aspect, the transceiver unit is further configured to send indication information indicating the AI data feature of the local data.

In a possible implementation of the third aspect, that the processing unit is configured to process the first AI model based on the local data to obtain the second AI model includes: The processing unit is specifically configured to perform at least one of training, distillation, and fusion on the first AI model based on the local data, to obtain the second AI model.

In the third aspect of this application, a composition module of the communication apparatus may be further configured to: perform the steps performed in the possible implementations of the first aspect, and achieve corresponding technical effects. For details, refer to the first aspect. Details are not described herein again.

According to a fourth aspect of this application, a communication apparatus is provided. The apparatus is a central node, or the apparatus is a part of components (for example, a processor, a chip, or a chip system) in the central node, or the apparatus may be a logical module or software that can implement all or a part of functions of the central node. In the eighth aspect and a possible implementation of the fourth aspect, that the communication apparatus is the central node is used as an example for description. The central node may be a terminal device or a network device.

The apparatus includes a processing unit and a transceiver unit. The transceiver unit is configured to receive one or more pieces of node information, where the one or more pieces of node information indicate AI data features of one or more nodes, and the one or more pieces of node information are used to determine transmission information of an AI model; the processing unit is configured to determine second information, where the second information indicates the transmission information; and the transceiver unit is further configured to send the second information.

In a possible implementation of the fourth aspect, the transmission information includes at least one of the following:

a node identifier of a node that sends a first AI model;
a node identifier of a node that receives a second AI model;
an identifier of an AI task corresponding to the first AI model and/or an identifier of an AI task corresponding to the second AI model;
an identifier of the first AI model;
an identifier of the second AI model;
a processing manner of processing the first AI model being at least one of training, distillation, and fusion;
a processing manner of processing the second AI model being at least one of training, distillation, and fusion; and
indication information indicating a non-relay node.

In a possible implementation of the fourth aspect, the AI data feature includes at least one of the following: an AI task to which AI data is applied, an object to which the AI data belongs, geographical location information of collecting the AI data, time information of collecting the AI data, and a quantity of samples of the AI data.

In the fourth aspect of this application, a composition module of the communication apparatus may be further configured to: perform the steps performed in the possible implementations of the second aspect, and achieve corresponding technical effects. For details, refer to the second aspect. Details are not described herein again.

According to a fifth aspect of this application, a communication apparatus is provided, including at least one processor. The at least one processor is coupled to a memory, the memory is configured to store a program or instructions, and the at least one processor is configured to execute the program or the instructions, to enable the apparatus to implement the method according to any one of the first aspect or the possible implementations of the first aspect.

According to a sixth aspect of this application, a communication apparatus is provided, including at least one processor. The at least one processor is coupled to a memory, the memory is configured to store a program or instructions, and the at least one processor is configured to execute the program or the instructions, to enable the apparatus to implement the method according to any one of the second aspect or the possible implementations of the second aspect.

According to a seventh aspect of this application, a communication apparatus is provided, including at least one logic circuit and an input/output interface. The logic circuit is configured to perform the method according to any one of the first aspect or the possible implementations of the first aspect.

According to an eighth aspect of this application, a communication apparatus is provided, including at least one logic circuit and an input/output interface. The logic circuit is configured to perform the method according to any one of the second aspect or the possible implementations of the second aspect.

In a possible design, the communication apparatus provided in the fifth aspect, the sixth aspect, the seventh aspect, or the eighth aspect may be a chip or a chip system.

According to a ninth aspect of this application, a computer-readable storage medium is provided. The storage medium is configured to store one or more computer-executable instructions. When the computer-executable instructions are executed by a processor, the processor performs the method according to any one of the first aspect or the second aspect or the possible implementations of the first aspect or the second aspect.

According to a tenth aspect of this application, a computer program product (or referred to as a computer program) is provided. When the computer program product is executed by a processor, the processor performs the method according to any one of the first aspect or the second aspect or the possible implementations of the first aspect or the second aspect.

According to an eleventh aspect of this application, a chip system is provided. The chip system includes at least one processor, configured to support a communication apparatus in implementing functions according to any one of the first aspect or the second aspect or the possible implementations of the first aspect or the second aspect.

In a possible design, the chip system may further include a memory. The memory is configured to store program instructions and data that are necessary for the first communication apparatus. The chip system may include a chip, or may include a chip and another discrete component. Optionally, the chip system further includes an interface circuit, and the interface circuit provides program instructions and/or data for the at least one processor.

According to a twelfth aspect of this application, a communication system is provided. The communication system includes the first node according to any one of the foregoing aspects and any implementation of the foregoing aspects.

Optionally, the communication system further includes the central node according to any one of the foregoing aspects and any implementation of the foregoing aspects.

For technical effects brought by any design manner in the third aspect to the twelfth aspect, refer to technical effects brought by different design manners in the first aspect and the second aspect. Details are not described herein again.

## BRIEF DESCRIPTION OF DRAWINGS

FIG. 1a is a diagram of a communication system according to this application;
FIG. 1b is another diagram of a communication system according to this application;
FIG. 1c is another diagram of a communication system according to this application;
FIG. 1d is a diagram of an AI processing process according to this application;
FIG. 1e is another diagram of an AI processing process according to this application;
FIG. 2a is another diagram of an AI processing process according to this application;
FIG. 2b is another diagram of an AI processing process according to this application;
FIG. 2c is another diagram of an AI processing process according to this application;
FIG. 2d is another diagram of an AI processing process according to this application;
FIG. 2e is another diagram of an AI processing process according to this application;
FIG. 3 is a diagram of interaction in a communication method according to this application;
FIG. 4a is a diagram of an AI processing process according to this application;
FIG. 4b is another diagram of an AI processing process according to this application;
FIG. 5 is another diagram of an AI processing process according to this application;
FIG. 6a is another diagram of an AI processing process according to this application;
FIG. 6b is another diagram of interaction in a communication method according to this application;
FIG. 7 is another diagram of interaction in a communication method according to this application;
FIG. 8 is a diagram of a communication apparatus according to this application;
FIG. 9 is another diagram of a communication apparatus according to this application;
FIG. 10 is another diagram of a communication apparatus according to this application;
FIG. 11 is another diagram of a communication apparatus according to this application; and
FIG. 12 is another diagram of a communication apparatus according to this application.

## DESCRIPTION OF EMBODIMENTS

First, some terms in embodiments of this application are described for ease of understanding by a person skilled in the art.

(1) Terminal device: The terminal device may be a wireless terminal device that can receive scheduling and indication information of a network device. The wireless terminal device may be a device providing voice and/or data connectivity for a user, a handheld device having a wireless connection function, or another processing device connected to a wireless modem.

The terminal device may communicate with one or more core networks or the internet through a radio access network (radio access network, RAN). The terminal device may be a mobile terminal device such as a mobile telephone (also referred to as a "cellular" phone or a mobile phone (mobile phone)), a computer, and a data card. For example, the terminal device may be a portable, pocket-sized, handheld, computer built-in, or vehicle-mounted mobile apparatus that exchanges voice and/or data with the radio access network. For example, the wireless terminal device may be a device like a personal communication service (personal communication service, PCS) phone, a cordless phone, a session initiation protocol (SIP) phone, a wireless local loop (wireless local loop, WLL) station, a personal digital assistant (personal digital assistant, PDA), a tablet computer (Pad), or a computer having a wireless transceiver function. The wireless terminal device may also be referred to as a system, a subscriber unit (subscriber unit), a subscriber station (subscriber station), a mobile station (mobile station, MS), a remote station (remote station), an access point (access point, AP), a remote terminal device (remote terminal), an access terminal device (access terminal), a user terminal device (user terminal), a user agent (user agent), a subscriber station device (subscriber station, SS), customer premises equipment (customer premises equipment, CPE), a terminal (terminal), user equipment (user equipment, UE), a mobile terminal (mobile terminal, MT), or the like.

By way of example, and not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that is directly worn on a body or integrated into clothes or an accessory of the user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that dedicated to only one type of application function and need to collaboratively work with other devices such as smartphones, for example, various smart bands, smart helmets, or smart jewelry for monitoring physical signs.

The terminal may alternatively be an unscrewed aerial vehicle, a robot, a terminal in device-to-device (device-to-device, D2D) communication, a terminal in vehicle-to-everything (vehicle-to-everything, V2X), a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like.

In addition, the terminal device may alternatively be a terminal device in a communication system (for example, a 6th generation (6th generation, 6G) communication system) evolved after a 5th generation (5th generation, 5G) communication system, a terminal device in a future evolved public land mobile network (public land mobile network, PLMN), or the like. For example, a 6G network may further extend a form and a function of a 5G communication terminal, and a 6G terminal includes but is not limited to a vehicle, a cellular network terminal (integrating a function of a satellite terminal), an unscrewed aerial vehicle, and an internet of things (internet of things, IoT) device.

In embodiments of this application, the terminal device may further obtain an AI service provided by a network device. Optionally, the terminal device may further have an AI processing capability.

(2) Network device: The network device may be a device in a wireless network. For example, the network device may be a RAN node (or device) connecting a terminal device to the wireless network, and may also be referred to as a base station. Currently, some examples of the RAN device are a base station (base station), an evolved NodeB (evolved NodeB, eNodeB), a base station gNB (gNodeB) in the 5G communication system, a transmission reception point (transmission reception point, TRP), an evolved NodeB (evolved NodeB, eNB), a radio network controller (radio network controller, RNC), a NodeB (NodeB, NB), a home base station (for example, a home evolved NodeB, or a home NodeB, HNB), a baseband unit (baseband unit, BBU), a wireless fidelity (wireless fidelity, Wi-Fi) access point AP, and the like. In addition, in a network structure, the network device may include a central unit (central unit, CU) node, a distributed unit (distributed unit, DU) node, or a RAN device including a CU node and a DU node.

Optionally, the RAN node may alternatively be a macro base station, a micro base station, an indoor base station, a relay node, or a donor node, or may be a radio controller in a cloud radio access network (cloud radio access network, CRAN) scenario. The RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU).

In another possible scenario, a plurality of RAN nodes coordinate to assist a terminal in implementing radio access, and different RAN nodes separately implement some functions of a base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but the person skilled in the art may understand meanings thereof. For example, in an open access network (open RAN, O-RAN or ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

Communication between the access network device and the terminal device complies with a specific protocol layer structure. A protocol layer may include a control plane protocol layer and a user plane protocol layer. The control plane protocol layer may include at least one of the following: a radio resource control (radio resource control, RRC) layer, a packet data convergence protocol (packet data convergence protocol, PDCP) layer, a radio link control (radio link control, RLC) layer, a media access control (media access control, MAC) layer, a physical (physical, PHY) layer, or the like. The user plane protocol layer may include at least one of the following: a service data adaptation protocol (service data adaptation protocol, SDAP) layer, a PDCP layer, an RLC layer, a MAC layer, a physical layer, or the like.

For a correspondence between network elements in the ORAN system and protocol layer functions that may be implemented by the network elements, refer to Table 1.

Table 1

| ORAN network element | 3GPP protocol layer function |
|---|---|
| O-CU-CP | RRC+PCDP-control plane (PDCP-C) |
| O-CU-UP | SDAP+PCDP-user plane (PDCP-U) |
| O-DU | RLC+MAC+PHY-high |
| O-RU | PHY-low |

The network device may be another apparatus that provides a wireless communication function for the terminal device. A specific technology and a specific device form that are used for the network device are not limited in embodiments of this application. For ease of description, this is not limited in embodiments of this application.

The network device may further include a core network device. For example, the core network device includes network elements such as a mobility management entity (mobility management entity, MME), a home subscriber server (home subscriber server, HSS), a serving gateway (serving gateway, S-GW), a policy and charging rules function (policy and charging rules function, PCRF), and a public data network gateway (public data network gateway, PDN gateway, P-GW) in a 4th generation (4th generation, 4G) network, and an access and mobility management function (access and mobility management function, AMF), a user plane function (user plane function, UPF), or a session management function (session management function, SMF) in a 5G network. In addition, the core network device may further include another core network device in the 5G network and a next generation network of the 5G network.

In embodiments of this application, the network device may alternatively be a network node having an AI capability, and may provide an AI service for a terminal or another network device, for example, may be an AI node, a computational capability node, a RAN node having an AI capability, or a core network element having an AI capability on a network side (an access network or a core network).

In embodiments of this application, an apparatus configured to implement a function of the network device may be a network device, or may be an apparatus, for example, a chip system, that can support the network device in implementing the function. The apparatus may be installed in the network device. In the technical solutions provided in embodiments of this application, an example in which the apparatus configured to implement the function of the network device is a network device is used for describing the technical solutions provided in embodiments of this application.

(3) Configuration and pre configuration: In this application, both the configuration and the preconfiguration are used. The configuration means that a network device/a server sends configuration information of some parameters or values of parameters to a terminal by using a message or signaling, so that the terminal determines, based on the values or the information, a communication parameter or a resource used during transmission. Similar to the configuration, the preconfiguration may be parameter information or a parameter value negotiated by a network device/a server with a terminal device in advance, or may be parameter information or a parameter value used by a base station/a network device or a terminal device as specified in a standard protocol, or may be parameter information or a parameter value pre-stored in a base station/a server or a terminal device. This is not limited in this application.

Further, these values and parameters may be changed or updated.

(4) Terms "system" and "network" in embodiments of this application may be used interchangeably. "A plurality of" means two or more than two. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

(5) "Sending" and "receiving" in embodiments of this application represent signal transmission directions. For example, "sending information to XX" may be understood as that a destination end of the information is XX, and may include direct sending through an air interface, or include indirect sending through an air interface by another unit or module. "Receiving information from YY" may be understood as that a source end of the information is YY, and may include direct receiving from YY through an air interface, or may include indirect receiving from YY through an air interface from another unit or module. "Sending" may alternatively be understood as "outputting" of a chip interface, and "receiving" may alternatively be understood as "inputting" of a chip interface.

In other words, sending and receiving may be performed between devices, for example, between a network device and a terminal device; or may be performed inside a device, for example, sending or receiving between components, modules, chips, software modules, or hardware modules inside the device through a bus, a cable, or an interface.

It may be understood that necessary processing, such as encoding and modulation, may be performed on the information between the source at which the information is sent and the destination, but the destination may understand valid information from the source. Similar descriptions in this application may be understood similarly, and details are not described again.

(6) In embodiments of this application, "indication" may include a direct indication and an indirect indication, or may include an explicit indication and an implicit indication. Information indicated by a piece of information (for example, the following indication information) is referred to as to-be-indicated information. In a specific implementation process, the to-be-indicated information may be indicated in a plurality of manners, for example, but not limited to, directly indicating the to-be-indicated information, for example, the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the remaining part of the to-be-indicated information is known or pre-agreed on. For example, specific information may alternatively be indicated by using an arrangement sequence of a plurality of pieces of information that is pre-agreed on (for example, predefined in a protocol), to reduce indication overheads to some extent. A specific indication manner is not limited in this application. It may be understood that, for a sender of the indication information, the indication information may indicate to-be-indicated information, and for a receiver of the indication information, the indication information may be used to determine the to-be-indicated information.

In this application, unless otherwise specified, for same or similar parts in embodiments, refer to each other. In embodiments of this application and methods/designs/implementations in embodiments, unless otherwise specified or logic conflicts occur, terms and/or descriptions between different embodiments and between the methods/designs/implementations in embodiments are consistent and may be mutually referenced, and different embodiments and technical features in the methods/designs/implementations in embodiments may be combined to form a new embodiment, method, or implementation based on an internal logic relationship thereof. The following implementations of this application are not intended to limit the protection scope of this application.

This application may be applied to a long term evolution (long term evolution, LTE) system, a new radio (new radio, NR) system, or a communication system (for example, 6G) evolved after 5G. The communication system includes at least one network device and/or at least one terminal device.

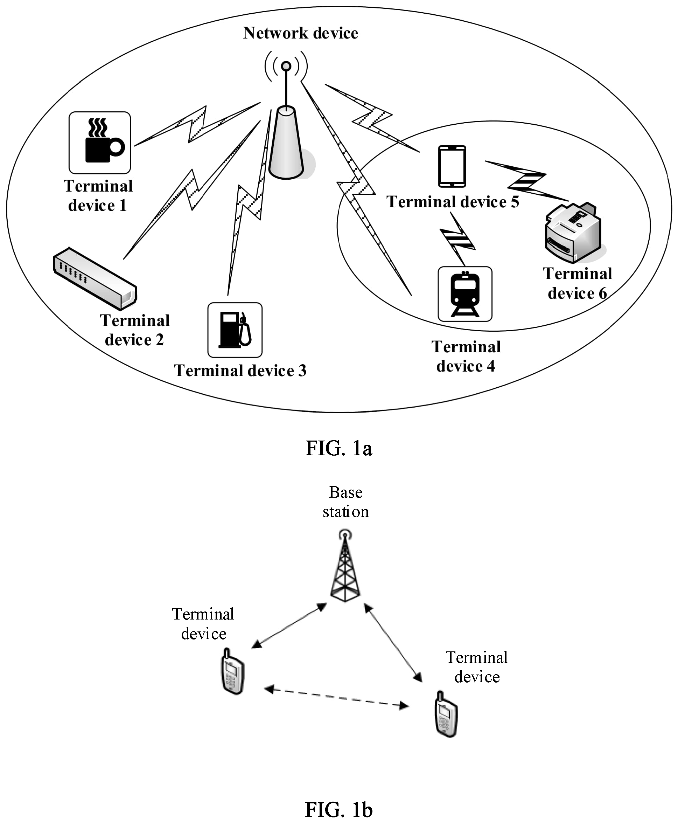

FIG. 1a is a diagram of a communication system according to this application. FIG. 1a shows an example of one network device and six terminal devices. The six terminal devices are separately a terminal device 1, a terminal device 2, a terminal device 3, a terminal device 4, a terminal device 5, and a terminal device 6. In the example shown in FIG. 1a, an example in which the terminal device 1 is a smart teacup, the terminal device 2 is a smart air conditioner, the terminal device 3 is a smart fuel dispenser, the terminal device 4 is a vehicle, the terminal device 5 is a mobile phone, and the terminal device 6 is a printer is used for description.

As shown in FIG. 1a, an AI configuration information sending entity may be the network device. AI configuration information receiving entities may be the terminal device 1 to the terminal device 6. In this case, the network device and the terminal device 1 to the terminal device 6 form a communication system. In the communication system, the terminal device 1 to the terminal device 6 may send data to the network device, and the network device needs to receive the data sent by the terminal device 1 to the terminal device 6. Besides, the network device may send configuration information to the terminal device 1 to the terminal device 6.

For example, in FIG. 1a, the terminal device 4 to the terminal device 6 may also form a communication system. The terminal device 5 serves as a network device, namely, an AI configuration information sending entity. The terminal device 4 and the terminal device 6 serve as terminal devices, namely, AI configuration information receiving entities. For example, in an internet of vehicles system, the terminal device 5 separately sends AI configuration information to the terminal device 4 and the terminal device 6, and receives data sent by the terminal device 4 and the terminal device 6; and correspondingly, the terminal device 4 and the terminal device 6 receive the AI configuration information sent by the terminal device 5, and send the data to the terminal device 5.

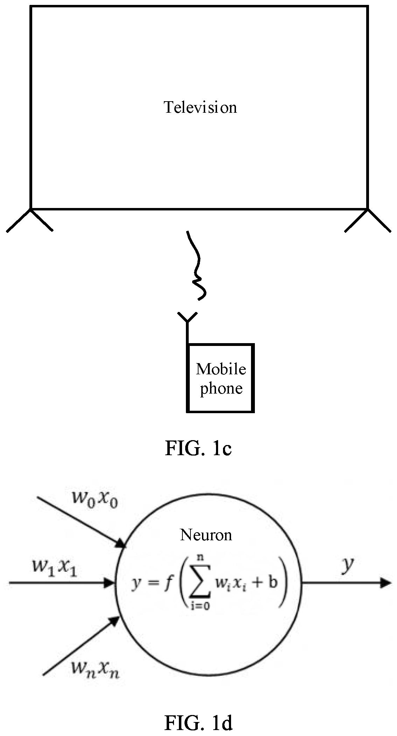

The communication system shown in FIG. 1a is used as an example. In addition to a communication-related business, an AI-related business may be performed between different devices (including between network devices, between a network device and a terminal device, and/or between terminal devices). For example, as shown in FIG. 1b, an example in which a network device is a base station is used. A communication-related business and an AI-related business may be performed between the base station and one or more terminal devices, and the communication-related business and the AI-related business may also be performed between different terminal devices. For another example, as shown in FIG. 1c, an example in which terminal devices include a television and a mobile phone is used. A communication-related business and an AI-related business may also be performed between the television and the mobile phone.

The technical solutions provided in this application may be applied to a wireless communication system (for example, the system shown in FIG. 1a, FIG. 1b, or FIG. 1c). For example, an AI network element may be introduced to the communication system provided in this application to implement some or all AI-related operations. The AI network element may also be referred to as an AI node, an AI device, an AI entity, an AI module, an AI model, an AI unit, or the like. The AI network element may be built in a network element in the communication system. For example, the AI network element may be an AI module built in the access network device, the core network device, a cloud server, or a network management system (operation, administration and maintenance, OAM), to implement an AI-related function. The OAM may serve as a network management system of the core network device and/or as a network management system of the access network device. Alternatively, the AI network element may be an independently disposed network element in the communication system. Optionally, the terminal or the chip built in the terminal may alternatively include the AI entity, configured to implement the AI-related function.

The following briefly describes artificial intelligence (artificial intelligence, AI) that may be used in this application.

The artificial intelligence (artificial intelligence, AI) can enable machines to have human intelligence, for example, can enable the machines to use computer software and hardware to simulate some intelligent human behaviors. To implement the artificial intelligence, a machine learning method may be used. In the machine learning method, a machine obtains a model through learning (or training) by using training data. The model represents mapping from an input to an output. The model obtained through learning may be used for inference (or prediction). To be specific, the model may be used to predict an output corresponding to a given input. The output may also be referred to as an inference result (or a prediction result).

Machine learning may include supervised learning, unsupervised learning, and reinforcement learning. The unsupervised learning may also be referred to as non-supervised learning.

In terms of the supervised learning, based on collected sample values and sample labels, a mapping relationship between the sample values and the sample labels is learned by using a machine learning algorithm, and the learned mapping relationship is expressed by using an AI model. A process of training a machine learning model is a process of learning the mapping relationship. In the training process, a sample value is input into the model to obtain a predicted value of the model, and a model parameter is optimized by calculating an error between the predicted value of the model and a sample label (ideal value). After the mapping relationship is learned, a new sample label may be predicted by using the learned mapping. The mapping relationship learned through the supervised learning may include linear mapping or non-linear mapping. A learning task may be classified into a classification task and a regression task based on a type of a label.

In terms of the unsupervised learning, an internal pattern of a sample is explored autonomously by using an algorithm based on a collected sample value. For a specific type of algorithm of the unsupervised learning, a sample is used as a supervised signal. In other words, a model learns a mapping relationship between samples, which is referred to as self-supervised learning. During training, a model parameter is optimized by calculating an error between a predicted value of the model and the sample. The self-supervised learning may be used for signal compression and decompression restoration. Common algorithms include an autoencoder, a generative adversarial network, and the like.

Reinforcement learning is different from supervised learning, and is an algorithm that learns a policy of resolving problems by interacting with an environment. Different from the supervised learning and the unsupervised learning, the reinforcement learning does not have clear "correct" action label data. The algorithm needs to interact with the environment to obtain a reward signal fed back by the environment and adjust a decision action to obtain a larger reward signal value. For example, in downlink power control, a reinforcement learning model adjusts a downlink transmit power of each user based on a total system throughput fed back by a wireless network, to expect to obtain a higher system throughput. An objective of the reinforcement learning is also to learn a mapping relationship between an environment status and a better (for example, an optimal) decision action. However, a label of "correct action" cannot be obtained in advance. Therefore, a network cannot be optimized by calculating an error between an action and the "correct action". Reinforcement learning training is implemented through iterative interaction with the environment.

A neural network (neural network, NN) is a specific model in a machine learning technology. According to a universal approximation theorem, the neural network can theoretically approximate any continuous function, so that the neural network has a capability of learning any mapping. In a conventional communication system, rich expertise is required to design a communication module. However, in a neural network-based deep learning communication system, an implicit pattern structure may be automatically discovered from a large quantity of data sets and a mapping relationship between data may be established, to obtain performance better than that of a conventional modeling method.

The idea of the neural network comes from a neuron structure of brain tissue. For example, each neuron performs a weighted summation operation on input values of the neuron, and outputs an operation result through an activation function. FIG. 1d is a diagram of a neuron structure. It is assumed that an input of a neuron is $x = [x_0, x_1, \ldots, x_n]$, and a weight corresponding to the input is $w = [w, w_1, \ldots, w_n]$, where n is a positive integer, $w_i$ and $x_i$ may be of various possible types such as a decimal, an integer (for example, 0, a positive integer, or a negative integer), or a complex number. $w_i$, as a weight of $x_i$, is used to weight $x_i$. A bias for performing weighted summation on input values based on the weights is, for example, b. There may be a plurality of forms of the activation function. It is assumed that an activation function of one neuron is $y = f(z) =$ max$(0, z)$, and an output of the neuron is $y = f\left(\sum_{i=0}^{i=n} w_i * x_i + b\right) = \max\left(0, \sum_{i=0}^{i=n} w_i * x_i + b\right)$. For another example, if an activation function of one neuron is $y = f(z) = z$, an output of the neuron is $y = f\left(\sum_{i=0}^{i=n} w_i * x_i + b\right) = \sum_{i=0}^{i=n} w_i * x_i + b$. b may be of various possible types such as a decimal, an integer (for example, 0, a positive integer, or a negative integer), or a complex number. Activation functions of different neurons in the neural network may be the same or different.

In addition, the neural network usually includes a plurality of layers, and each layer may include one or more neurons. A depth and/or a width of the neural network are/is increased, so that an expression capability of the neural network can be improved, and a more powerful information extraction and abstraction modeling capability can be provided for a complex system. The depth of the neural network may refer to a quantity of layers included in the neural network, and a quantity of neurons included in each layer may be referred to as the width of the layer. In an implementation, the neural network includes an input layer and an output layer. The input layer of the neural network performs neuron processing on received input information, and transfers a processing result to the output layer. The output layer obtains an output result of the neural network. In another implementation, the neural network includes an input layer, a hidden layer, and an output layer. The input layer of the neural network performs neuron processing on received input information, and transfers a processing result to an intermediate hidden layer. The hidden layer performs calculation on the received processing result to obtain a calculation result. The hidden layer transfers the calculation result to the output layer or a next adjacent hidden layer. Finally, the output layer obtains an output result of the neural network. One neural network may include one hidden layer, or include a plurality of hidden layers that are sequentially connected. This is not limited.

The neural network is, for example, a deep neural network (deep neural network, DNN). According to a network construction manner, the DNN may include a feedforward neural network (feedforward neural network, FNN), a convolutional neural network (convolutional neural network, CNN), and a recurrent neural network (recurrent neural network, RNN).

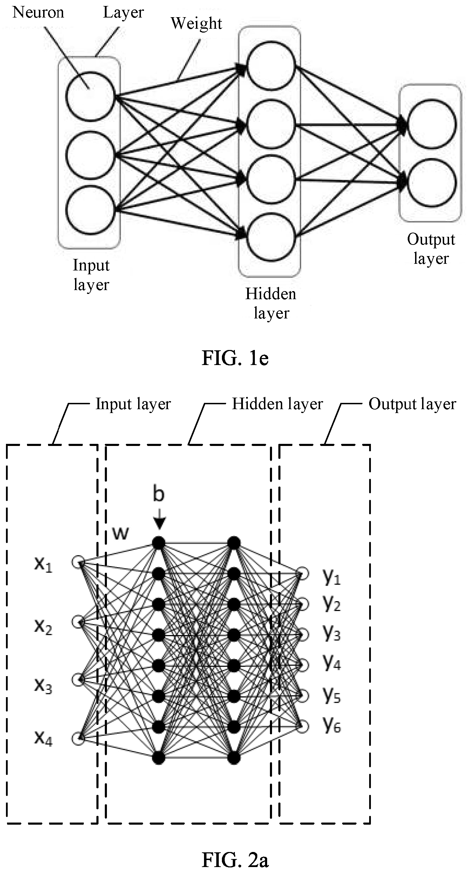

A feature of the FNN network is that neurons at adjacent layers are completely connected to each other. Due to this feature, the FNN usually needs a large amount of storage space, resulting in high computing complexity. FIG. 1e is a diagram of an FNN network.

The CNN is a neural network dedicated to processing data of a similar grid structure. For example, both time series data (timeline discrete sampling) and image data (two-dimensional discrete sampling) may be considered as the data of the similar grid structure. The CNN performs a convolution operation by capturing partial information through a window with a fixed size, instead of performing an operation by using all input information at one time. This greatly reduces a calculation amount of a model parameter. In addition, based on different types of information captured through the window (for example, a person and an object in a same image are information of different types), different convolution kernel operations may be used for each window, so that the CNN can better extract a feature of input data.

The RNN is a DNN network using feedback time series information. Inputs of the RNN include a new input value at a current moment and an output value of the RNN at a previous moment. The RNN is suitable for obtaining a sequence feature having a time correlation, and is especially suitable for applications such as speech recognition and channel encoding and decoding.

In the foregoing model training process of machine learning, a loss function may be defined. The loss function describes a gap or a difference between an output value of the model and an ideal target value. The loss function may be expressed in a plurality of forms, and a specific form of the loss function is not limited. The model training process may be considered as the following process: A part of or all parameters of the model are adjusted, so that a value of the loss function is less than a threshold or meets a target requirement.

The model may also be referred to as an AI model, a rule, another name, or the like. The AI model may be considered as a specific method for implementing an AI function. The AI model represents a mapping relationship or a function between an input and an output of the model. The AI function may include one or more of the following: data collection, model training (or model learning), model information release, model deduction (also referred to as model inference, inference, prediction, or the like), model monitoring or model verification, inference result release, or the like. The AI function may also be referred to as an AI (-related) operation or an AI-related function.

The following describes an example of an implementation process of a neural network with reference to the accompanying drawings.

1. Fully-connected neural network

The fully-connected neural network is also referred to as a multilayer perceptron (multilayer perceptron, MLP). As shown in FIG. 2a, one MLP includes one input layer (left side), one output layer (right side), and a plurality of hidden layers (middle). Each layer of the MLP includes several nodes, which are referred to as neurons. Neurons at two adjacent layers are connected to each other in pairs.

Optionally, in consideration of neurons at two adjacent layers, an output h of a neuron at a lower layer is a weighted sum of all neurons x at an upper layer connected to the neuron at the lower layer, and may be expressed, by using an activation function, as:

$$h = f(wx + b)$$

Herein, w is a weight matrix, b is a bias vector, and f is the activation function.

Further, optionally, the output of the neural network may be recursively expressed as:

$$y = f_n(w_n f_{n-1}(\ldots) + b_n)$$

Herein, n is an index of the neural network layer, $1 \leq n \leq N$, and N is a total quantity of layers of the neural network.

In other words, the neural network may be understood as a mapping relationship from an input data set to an output data set. The neural network is usually initialized randomly, and a process of obtaining the mapping relationship from random w and b by using existing data is referred to as training of the neural network.

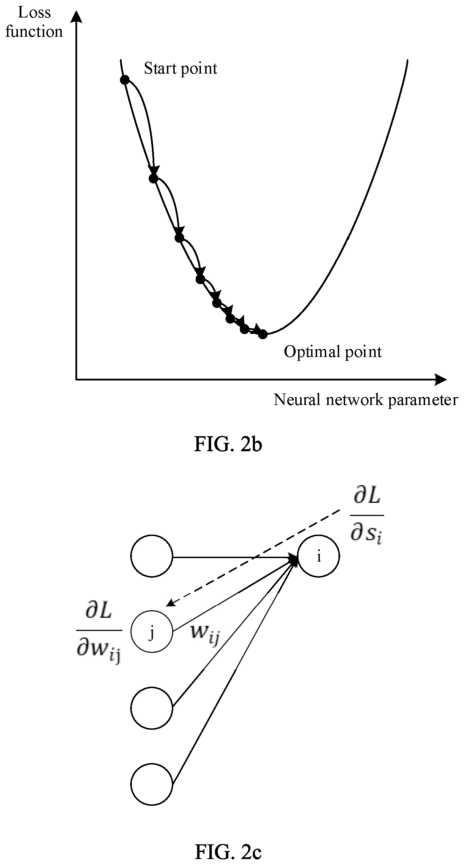

Optionally, a specific training manner is to evaluate an output result of the neural network by using a loss function (loss function). As shown in FIG. 2b, an error may be backpropagated, and a neural network parameter (including w and b) can be iteratively optimized by using a gradient descent method until the loss function reaches a minimum value, namely, "a better point (for example, an optimal point)" in FIG. 2b. It may be understood that the neural network parameter corresponding to "the better point (for example, the optimal point)" in FIG. 2b may be used as a neural network parameter in trained AI model information.

Further optionally, a gradient descent process may be expressed as:

$$\boldsymbol{\theta} \leftarrow \boldsymbol{\theta} - \eta \frac{\partial L}{\partial \boldsymbol{\theta}}$$

Herein, $\theta$ is a to-be-optimized parameter (including w and b), L is a loss function, $\eta$ is a learning rate for controlling a gradient descent step, a represents a derivative operation, and $\frac{\partial L}{\partial \boldsymbol{\theta}}$ represents a derivative of L with respect to $\theta$.

Further, optionally, a backpropagation process uses a chain method for obtaining a bias. As shown in FIG. 2c, a gradient of a parameter at a previous layer may be obtained by recursive calculation of a gradient of a parameter at a next layer, and may be expressed as:

$$\frac{\partial L}{\partial w_{ij}} = \frac{\partial L}{\partial s_i} \frac{\partial s_i}{\partial w_{ij}}$$

Herein, $w_{ij}$ is a weight of connecting a node j to a node i, and $s_i$ is a weighted sum of inputs on the node i.

## 2. Federated learning (Federated Learning, FL)

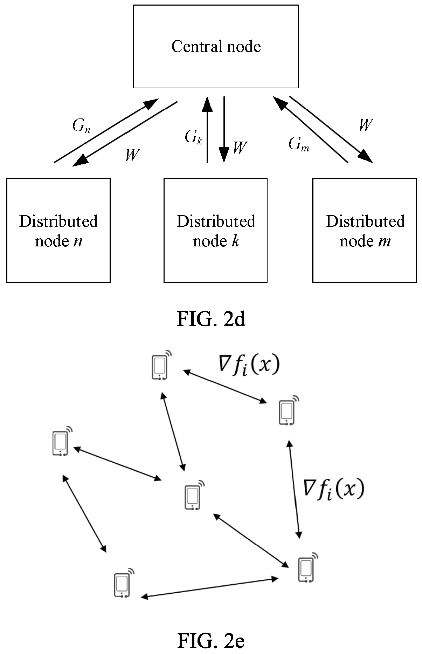

A concept of the federated learning is proposed to effectively resolve difficulties faced by the current development of artificial intelligence. While ensuring user data privacy and security, the federated learning facilitates various edge devices and a server at a central end to collaborate to efficiently complete a learning task of a model. As shown in FIG. 2d, an FL architecture is a currently most widely used training architecture in the FL field. A FedAvg algorithm is a basic algorithm of FL. An algorithm procedure of the FedAvg algorithm is roughly as follows:

(1) The central end initializes a to-be-trained model $w_g^0$ and broadcasts and sends the model to all client devices.

(2) In an (t $\in$ [1, $T$])$^{th}$ round, a client k $\in$ [1, $K$] performs E epochs of training on a received global model $w_g^{t-1}$ based on a local dataset $\mathcal{D}_k$ to obtain a local training result $w_k^t$, and reports the local training result to a central node.

(3) The central node summarizes and collects local training results from all (or some) clients. It is assumed that a set of clients that upload a local model in a ($t$)$^{th}$ round is $\mathcal{S}^t$. The central end performs weighted averaging by using a quantity of samples of a corresponding client as a weight to obtain a new global model, and a specific update rule is

$$w_g^t = \sum_{k \in \mathcal{S}t} \frac{D_k w_k^t}{\sum_{k \in \mathcal{S}t} D_k}.$$

Then, the central end broadcasts and sends a global model $w_g^t$ of a latest version to all client devices for a new round of training.

(4) Steps (2) and (3) are repeated until the model converges finally or a quantity of training rounds reaches an upper limit.

In addition to the local model $w_k^t$, the central node may further report a trained local gradient $g_k^t$. The central node averages the local gradient and updates the global model based on a direction of an average gradient.

It can be seen that, in an FL framework, a dataset exists on a distributed node. To be specific, the distributed node collects a local dataset, performs local training, and reports a local result (a model or a gradient) obtained through training to the central node. The central node does not have a dataset, is only responsible for fusing training results of distributed nodes to obtain a global model, and delivers the global model to the distributed nodes.

## 3. Decentralized learning

Different from the federated learning, another distributed learning architecture, namely, decentralized learning shown in FIG. 2e, considers a fully distributed system without a central node. A design objective $f(x)$ of a decentralized learning system is usually an average value of objectives $f_i(x)$ of all nodes, namely, $f(x) = \frac{1}{n}\sum_{i=1}^{n} f_i(x)$, where $n$ is a quantity of distributed nodes, and $x$ is a parameter to be optimized. In machine learning, $x$ is a parameter of a machine learning (for example, a neural network) model. Each node calculates a local gradient $\nabla f_i(x)$ by using local data and a local target $f_i(x)$, and then sends the local gradient to a neighbor node that can communicate with each other. After receiving gradient information sent by a neighbor node of any node, the node may update a parameter x of a local model according to the following formula:

$$x_i^{k+1} = x_i^k - \alpha_k \left( \frac{1}{|N_i|} \sum_{j \in N_i} \nabla f_j(x_j^k) \right)$$

Herein, $x_i^{k+1}$ represents a parameter of the local model that is updated for the (k+1)$^{th}$ (k is a natural number) time in an i$^{th}$ node, $x_i^k$ represents a parameter of the local model that is updated for the k$^{th}$ time in the i$^{th}$ node (if k is 0, it is indicated that $x_i^k$ is a parameter of the local model that is not updated in the i$^{th}$ node), $\alpha_k$ represents an optimization

coefficient, $N_i$ is a set of neighbor nodes of a node i, and $|N_i|$ represents a quantity of elements in the set of neighbor nodes of the node i, that is, a quantity of neighbor nodes of the node i. Through information exchange between nodes, the decentralized learning system will finally learn a unified model.

The technical solutions provided in this application may be applied to a wireless communication system (for example, the system shown in FIG. 1a or FIG. 1b). In the wireless communication system, a communication node usually has a signal receiving and sending capability and a computational capability. A network device having a computational capability is used as an example. The computational capability of the network device is mainly to provide computational power support for a signal receiving and sending capability (for example, perform computing on a time domain resource, a frequency domain resource, and the like that carry a signal), to implement a communication task between the network device and another communication node.

However, in a communication network, in addition to providing computational power support for the foregoing communication task by using the computational capability of the communication node, the communication node may further have a surplus computational capability. Therefore, how to use these computational capabilities is an urgent technical problem to be resolved.

In an implementation example, to cope with the vision of intelligence and inclusiveness in the future, intelligence may further evolve at a wireless network architecture level. In a future communication system, AI may be further integrated deeply with a wireless network, to implement network-inherent intelligence and also include terminal intelligence. For example, the integration of the AI and the wireless network may be applied to the following new requirements and new scenarios: For example, terminal connections are more flexible and intelligent, including but not limited to diversified terminal types, super internet of things (Supper IoT) (for example, the supper IoT may include internet of things, internet of vehicles, industry, healthcare, and the like), massive connections, more flexible terminal connections, and terminals having specific AI capabilities. Another example is network-inherent intelligence. In addition to a conventional communication connection service, the network will further provide computing and AI services to better support inclusive, real-time, and highly secure AI services. These new requirements and new scenarios may bring changes to a wireless network architecture and a communication mode.

Generally, nodes participating in AI learning may include nodes in a plurality of distributed communication networks, for example, a terminal device and a network device. In a current learning architecture (for example, the learning architecture shown in FIG. 2d or FIG. 2e), it is assumed that a learning system has been constructed, to be specific, all participating nodes are oriented to a same learning task, to jointly train a global machine learning model. However, current research does not discuss the construction of the learning system, to be specific, how to aggregate the nodes oriented to the same learning task to complete an AI learning task.

To resolve the foregoing problem, this application provides a communication method and a related device, so that computational power of a communication node can be applied to artificial intelligence (artificial intelligence, AI) learning, and AI model processing based on AI data feature matching can be implemented.

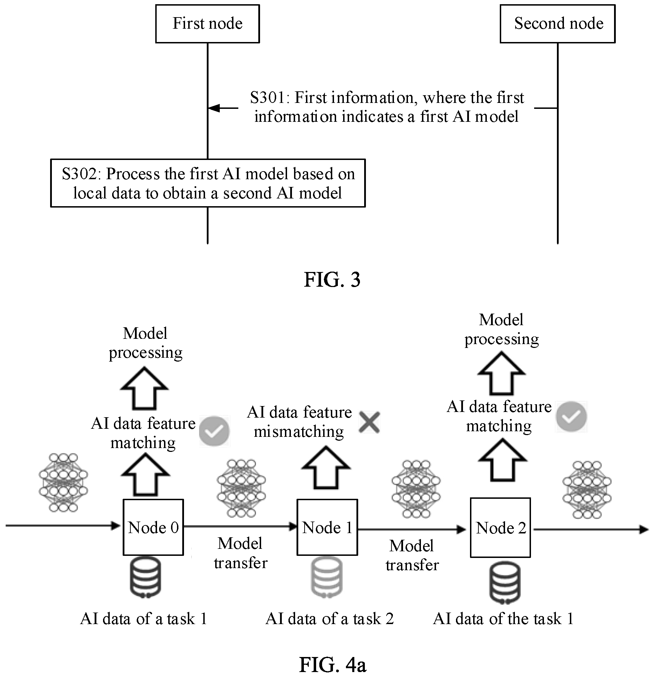

FIG. 3 is a diagram of an implementation of a communication method according to this application. The method includes the following steps.

It should be noted that in FIG. 3, the method is illustrated by using an example in which a first node and a second node are used as execution bodies of interaction illustration. However, the execution bodies of the interaction illustration are not limited in this application. For example, the first node in S301 in FIG. 3 and a corresponding implementation may be replaced with a chip, a chip system, or a processor that supports the first node in implementing the method, or may be a logical module or software that can implement all or some functions of the first node. The second node in S301 in FIG. 3 and a corresponding implementation may also be replaced with a chip, a chip system, or a processor that supports the second node in implementing the method, or may be replaced with a logical module or software that can implement all or some functions of the second node. The first node may be a terminal device or a network device, and the second node may also be a terminal device or a network device.

S301: The second node sends first information, and correspondingly, the first node receives the first information. The first information indicates a first AI model.

In this application, an AI model may be replaced with a neural network, an AI neural network, a neural network model, an AI neural network model, a machine learning model, or the like.

It should be understood that, in step S301, that the first information received by the first node indicates the first AI model may be understood as that the first information includes an index of the first AI model, so that a receiver of the first information (namely, the first node) can obtain the first AI model based on the index, or that the first information includes the first AI model, so that a receiver of the first information (namely, the first node) can obtain the first AI model from the first information.

It should be understood that the AI model in this application may be applied to an AI task. In other words, an execution process of the AI task includes processing performed by a communication node on one or more AI models. The AI task may be a task that requires two or more communication nodes (for example, the first node and the second node) to participate in processing, and the communication node includes a terminal device and/or a network device. For example, the AI task may include a federated learning (federated learning, FL) task, a distributed training task, a distributed learning task, or the like.

Optionally, the first node and the second node may be communication nodes participating in an AI task. The first node and the second node are neighbor nodes of each other, that is, the first node and the second node are nodes that can communicate with each other. In step S301, the second node sends the first information to the first node. In other words, the second node may be a previous-hop node of the first node, that is, the first node may be a next-hop node of the second node.

S302: The first node processes the first AI model based on local data to obtain a second AI model. An AI data feature of the local data meets an AI data feature corresponding to a processing requirement of the first AI model.

It should be understood that AI data may be AI-related data, and an AI data feature may indicate a feature (or a characteristic, a trait, an attribute, or a property) of the AI-related data, or the like. In step S302, that the AI data feature of the local data of the first node meets the AI data feature corresponding to the processing requirement of the first AI model may be understood as at least one of the following ① to ④.

① The AI data feature corresponding to the processing requirement of the first AI model is a subset of the AI data feature of the local data of the first node.
② The AI data feature of the local data of the first node is greater than or equal to the AI data feature corresponding to the processing requirement of the first AI model.
③ The AI data feature of the local data of the first node includes at least the AI data feature corresponding to the processing requirement of the first AI model.
④ The AI data feature of the local data of the first node matches/corresponds to the AI data feature corresponding to the processing requirement of the first AI model.

For example, the AI data feature may include at least one of the following features 1 to 5.

Feature 1: AI task to which AI data is applied

For the feature 1, different AI tasks may be distinguished by using different task identifiers (identifiers, IDs), where the task ID may be preconfigured or configured, and this is not limited herein.

For example, when the AI data feature includes the feature 1, as shown in FIG. 4a, both local data of a node 0 and local data of a node 2 may be applied to an AI task whose task ID is 1 (denoted as "AI data of a task 1" in FIG. 4a), and local data of a node 1 may be applied to an AI task whose task ID is 2 (denoted as "AI data of a task 2" in FIG. 4a). In addition, an AI data feature corresponding to a processing requirement of an AI model in a model transfer process is AI data whose task ID is 1, that is, the AI model in the model transfer process may be an AI model in the AI task whose task ID is 1.

It should be understood that the model transfer process shown in FIG. 4a may be an implementation example of step S301, that is, the node 1 may determine the first AI model by using the model transfer process. In other words, in the example shown in FIG. 4a, the first node may be the node 1 in the figure and the second node may be the node 0 in the figure, or the first node may be the node 2 in the figure and the second node may be the node 1 in the figure.

In the example shown in FIG. 4a, for the node 0, when the node 0 determines that the AI task to which the local data is applied includes at least an AI task corresponding to a processing requirement of an AI model, the node 0 may determine that an AI data feature of the local data of the node 0 meets an AI data feature corresponding to the processing requirement of the AI model (which is denoted as "AI data feature matching" in the figure). Therefore, the node 0 may process the received AI model (namely, the processing process in step S302), and send a processing result to the node 1 by using the model transfer process.

In the example shown in FIG. 4a, for the node 1, when the node 1 determines that the AI task to which the local data is applied is different from the AI task corresponding to the processing requirement of the AI model, the node 1 may determine that an AI data feature of the local data of the node 1 does not meet the AI data feature corresponding to the processing requirement of the AI model (which is denoted as "AI data feature mismatching" in the figure). Therefore, the node 1 may discard or ignore the received AI model, or transmit the received AI model to a next-hop node (for example, the node 2 in FIG. 4a).

Optionally, in the example shown in FIG. 4a, the node 0 and the node 1 are neighbor nodes of each other (namely, nodes that can communicate with each other), the node 1 and the node 2 are neighbor nodes of each other (namely, nodes that can communicate with each other), and the node 0 and the node 2 are not neighbor nodes of each other (namely, the node 0 and the node 2 cannot communicate with each other). In other words, the node 0 and the node 2 may communicate with each other through the node 1, and the node 1 may be considered as a relay node of the node 0 and the node 2. When the node 1 determines AI data feature mismatching, the node 1 may not perform the model processing process. In addition, the node 1 may serve as the relay node to perform a model interaction process, to be specific, forward the AI model (or indication information indicating the AI model) from the node 0 to the node 2, so that the node 2 can obtain, by using the model transfer process, the AI model corresponding to the AI data of the task 1, and perform subsequent processing.

In the example shown in FIG. 4a, for the node 2, after the node 2 determines the AI model by using the model transfer process, when the node 2 determines that the AI task to which the local data is applied includes at least the AI task corresponding to the processing requirement of the AI model, the node 2 may determine that an AI data feature of the local data of the node 2 meets the AI data feature corresponding to the processing requirement of the AI model (which is denoted as "AI data feature matching" in the figure). Therefore, the node 2 may process the received AI model (namely, the processing process in step S302).

Optionally, the node 2 may further transmit a processed AI model, so that a next-hop node of the node 2 determines the processed AI model.

Feature 2: Object to which the AI data belongs

For the feature 2, different objects to which the AI data belongs may be distinguished by using different object IDs, where the object ID may be preconfigured or configured, and this is not limited herein. For example, the different objects to which the AI data belongs may be distinguished by using different objects corresponding to the AI data, including AI data of an object 1, AI data of an object 2, and the like. The AI data of the object 1 and the AI data of the object 2 may be AI data of different industries. For example, the AI data of the object 1 and the AI data of the object 2 may be any two different types of AI data in AI data of a medical industry, AI data of an education industry, AI data of a financial industry, or the like.

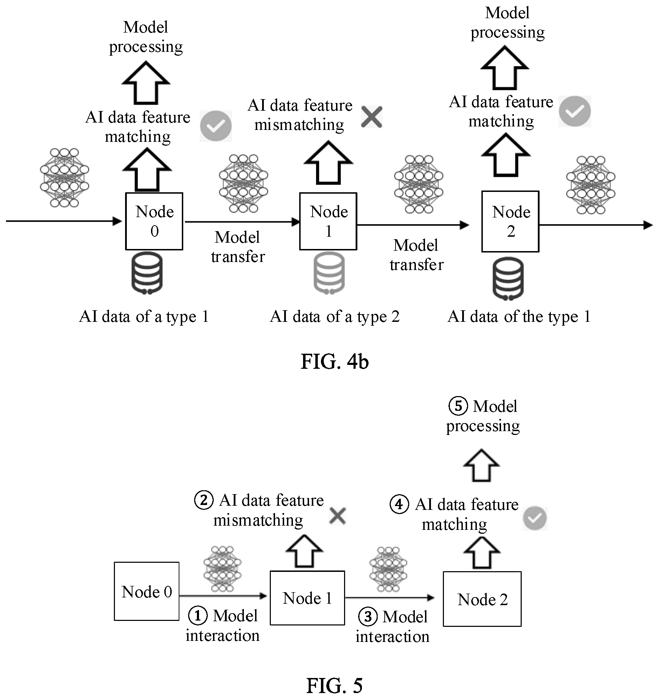

For example, when the AI data feature includes the feature 2, as shown in FIG. 4b, both local data of a node 0 and local data of a node 2 may include data whose object identifier is the object 1 (denoted as "AI data of an object 1" in FIG. 4b), and local data of a node 1 may include data whose object identifier is the object 2 (denoted as "AI data of an object 2" in FIG. 4b). In addition, an AI data feature corresponding to a processing requirement of an AI model in a model transfer process is AI data of the object 1, that is, the AI model in the model transfer process needs to be processed by using the AI data of the object 1.

It should be understood that the model transfer process shown in FIG. 4b may be an implementation example of step S301, that is, the node 1 may determine the first AI model by using the model transfer process. In other words, in the example shown in FIG. 4b, the first node may be the node 1 in the figure and the second node may be the node 0 in the figure, or the first node may be the node 2 in the figure and the second node may be the node 1 in the figure.

In the example shown in FIG. 4b, for the node 0, when the node 0 determines that the object to which the local data belongs includes at least the object corresponding to the processing requirement of the AI model, the node 0 may determine that an AI data feature of the local data of the node 0 meets the AI data feature corresponding to the processing requirement of the AI model (which is denoted as "AI data feature matching" in the figure). Therefore, the node 0 may process the received AI model (namely, the processing process in step S302), and send a processing result to the node 1 by using the model transfer process.

In the example shown in FIG. 4b, for the node 1, when the node 1 determines that the object to which the local data belongs is different from the object corresponding to the processing requirement of the AI model, the node 1 may determine that an AI data feature of the local data of the node 1 does not meet the AI data feature corresponding to the processing requirement of the AI model (which is denoted as "AI data feature mismatching" in the figure). Therefore, the node 1 may discard or ignore the received AI model, or transmit the received AI model to a next-hop node (for example, the node 2 in FIG. 4b).

Optionally, in the example shown in FIG. 4b, the node 0 and the node 1 are neighbor nodes of each other (namely, nodes that can communicate with each other), the node 1 and the node 2 are neighbor nodes of each other (namely, nodes that can communicate with each other), and the node 0 and the node 2 are not neighbor nodes of each other (namely, the node 0 and the node 2 cannot communicate with each other). In other words, the node 0 and the node 2 may communicate with each other through the node 1, and the node 1 may be considered as a relay node of the node 0 and the node 2. When the node 1 determines AI data feature mismatching, the node 1 may not perform the model processing process. In addition, the node 1 may serve as the relay node to perform a model interaction process, to be specific, forward the AI model (or indication information indicating the AI model) from the node 0 to the node 2, so that the node 2 can obtain, by using the model transfer process, the AI model corresponding to the AI data of the type 1, and perform subsequent processing.

In the example shown in FIG. 4b, for the node 2, after the node 2 determines the AI model by using the model transfer process, when the node 2 determines that the object to which the local data belongs includes at least the object corresponding to the processing requirement of the AI model, the node 2 may determine that an AI data feature of the local data of the node 2 meets the AI data feature corresponding to the processing requirement of the AI model (which is denoted as "AI data feature matching" in the figure). Therefore, the node 2 may process the received AI model (namely, the processing process in step S302).

Optionally, the node 2 may further transmit a processed AI model, so that a next-hop node of the node 2 determines the processed AI model.

Feature 3: Geographical location information of collecting the AI data

For the feature 3, different geographical location information of collecting the AI data may be distinguished by using different geographical location identifiers, where the different geographical location identifiers may be preconfigured or configured, and this is not limited herein. For example, the different geographical location identifiers may be distinguished by using different collection locations of the AI data, including GPS information, indoor/outdoor information, LOS scenario/NLOS scenario information, and the like.

In an implementation example, a possible requirement is that the AI model needs to be processed based on data of a geographical location area range, to obtain an AI model applicable to the geographical area. In this case, the geographical area may be set as the feature 3.

In another implementation example, a possible requirement is that the AI model needs to be processed based on data of different geographical location areas, to obtain an AI model with better generalization and applicable to a plurality of geographical areas. In this case, the plurality of geographical areas may be set as the feature 3.

Feature 4: Time information of collecting the AI data

For the feature 4, different time information of collecting the AI data may be distinguished by using different time information identifiers, where the different time information identifiers may be preconfigured or configured, and this is not limited herein. For example, the different time information identifiers may be distinguished by using different collection time of the AI data, including a specific time period, daytime/night, working day/holiday, and the like.

In an implementation example, a possible requirement is that the AI model needs to be processed based on data in a time period, to obtain an AI model applicable to the time period. In this case, the time period may be set as the feature 4.

In another implementation example, a possible requirement is that the AI model needs to be processed based on data of different time periods, to obtain an AI model with better generalization and applicable to a plurality of time periods. In this case, the plurality of time periods may be set as the feature 4.

Feature 5: Quantity of samples of the AI data

For the feature 5, quantities of samples of the AI data may be distinguished by using different sample quantity identifiers, where the different sample quantity identifiers may be preconfigured or configured, and this is not limited herein.

It should be noted that two or more of the feature 1 to the feature 5 may be used in combination.

For example, when the feature 1 and the feature 2 are used in combination, that the AI data feature of the local data of the first node meets the AI data feature corresponding to the processing requirement of the first AI model includes that the AI task to which the local data of the first node is applied and the AI task corresponding to the processing requirement of the AI model are a same AI task, and the object to which the local data of the first node belongs and the object corresponding to the processing requirement of the AI model are a same object.

For another example, when the feature 1 and the feature 5 are combined, that the AI data feature of the local data of the first node meets the AI data feature corresponding to the processing requirement of the first AI model includes that the AI task to which the local data of the first node is applied includes at least the AI task corresponding to the processing requirement of the AI model, and the quantity of samples of the local data of the first node is greater than or equal to the quantity of samples corresponding to the processing requirement of the AI model.

In a possible implementation, that the first node processes the first AI model based on the local data to obtain the second AI model includes: The first node performs at least one of training, distillation, and fusion on the first AI model based on the local data, to obtain the second AI model. Specifically, the first node may perform the at least one of the foregoing processing on the first AI model based on the local data, to improve flexibility of solution implementation.

Based on the technical solution shown in FIG. 3, the first information received by the first node in step S301 indicates the first AI model. Then, in step S302, the first node processes the first AI model based on the local data, to obtain the second AI model. The AI data feature of the local data of the first node meets the AI data feature corresponding to the processing requirement of the first AI model. In other words, the first node is used as a communication node in the communication system, and the AI data feature corresponding to the processing requirement of the first AI model processed by the first node matches the AI data feature of the local data of the first node. Therefore, when a communication node in the communication system is used as a node participating in AI model processing, computational power of the communication node can be applied to an AI model processing process in an AI learning system, to implement the AI model processing process in a communication network.

In addition, the AI data feature of the local data of the first node meets the AI data feature corresponding to the processing requirement of the first AI model processed by the first node, so that the first node can process an AI model that matches the AI data feature of the local data. Correspondingly, the AI model can also be processed by a node that meets the processing requirement, thereby implementing AI model processing based on AI data feature matching.

In the technical solution shown in FIG. 3, the first node may determine the AI data feature corresponding to the processing requirement of the first AI model in a plurality of manners, for example, in a preconfiguration manner or in an indication manner of another device.

For example, in a possible implementation, before the first node processes the first AI model based on the local data in step S302, the method may further include: The first node receives the fourth information, where the fourth information indicates the AI data feature corresponding to the processing requirement of the first AI model (for example, the fourth information may indicate at least one of the feature 1 to the feature 5). Specifically, the first node may further receive the fourth information indicating the AI data feature corresponding to the processing requirement of the first AI model, so that the first node can determine, based on the fourth information, that the AI data feature of the local data of the first node meets the AI data feature of the processing requirement of the AI model, and further determine to process the second AI model.

Optionally, the fourth information may come from the second node, or the fourth information may come from the central node mentioned below, or the fourth information may come from another adjacent node of the first node. This is not limited herein.

Optionally, for example, the fourth information comes from the second node. The first information in step S301 and the fourth information may be carried in same messages/signaling/information, or may be carried in different messages/signaling/information. This is not limited herein.

In an implementation example, for example, the first information in step S301 and the fourth information may be carried in the same message/signaling/information. As shown in FIG. 5, an interaction process of the node 0, the node 1, and the node 2 is still used as an example for description herein. It can be learned from the foregoing descriptions that the first node is a next-hop node of the second node. To be specific, the first node may be the node 1 in FIG. 5 and the second node may be the node 0 in FIG. 5, or the first node may be the node 2 in FIG. 5 and the second node may be the node 1 in FIG. 5.

For example, in FIG. 5, when the node 1 is used as the first node, the node 1 may receive the first information and the fourth information from the node 0 by using a model interaction process in step ①, where the first information indicates the first AI model, and the fourth information indicates the AI data feature corresponding to the processing requirement of the first AI model. In addition, when the node 1 determines, in step , that the AI data feature of the local data of the node 1 does not meet the AI data feature corresponding to the processing requirement of the AI model (which is denoted as "AI data feature mismatching" in the figure), the node 1 may determine not to process the first AI model, that is, the node 1 may not perform step S302.

Optionally, in the example shown in FIG. 5, the node 0 and the node 1 are neighbor nodes of each other (namely, nodes that can communicate with each other), the node 1 and the node 2 are neighbor nodes of each other (namely, nodes that can communicate with each other), and the node 0 and the node 2 are not neighbor nodes of each other (namely, the node 0 and the node 2 cannot communicate with each other). In other words, the node 0 and the node 2 may communicate with each other through the node 1, and the node 1 may be considered as a relay node of the node 0 and the node 2. When the node 1 does not perform step S302, the node 1 may serve as the relay node to perform a model interaction process, to be specific, forward the AI model (or indication information indicating the AI model) from the node 0 to the node 2, so that the node 2 can obtain the AI model by using step ③ and perform subsequent processing.

For another example, in FIG. 5, when the node 2 is used as the first node, the node 2 may receive the first information and the fourth information from the node 1 by using a model interaction process in step ③, where the first information indicates the first AI model, and the fourth information indicates the AI data feature corresponding to the processing requirement of the first AI model. In addition, when the node 2 determines, in step ④, that the AI data feature of the local data of the node 2 meets the AI data feature corresponding to the processing requirement of the AI model (which is denoted as "AI data feature matching" in the figure), the node 2 may process the first AI model in step ⑤, that is, the node 2 may perform step S302.

In addition, for the first node, after step S302, the method further includes: The first node sends fourth information and/or fifth information (for example, the fifth information may indicate at least one of the foregoing features 1 to 5), where the fourth information indicates the AI data feature corresponding to the processing requirement of the first AI model, and the fifth information indicates an AI data feature corresponding to a processing requirement of the second AI model. Specifically, the first node may further send the fourth information indicating the AI data feature corresponding to the processing requirement of the first AI model, and/or the first node may further send the fifth information indicating the AI data feature corresponding to the processing requirement of the second AI model. In this way, a receiver of the fourth information and/or the fifth information can determine an AI data feature corresponding to a processing requirement of an AI model. Subsequently, the receiver can determine, based on the fourth information and/or the fifth information, whether an AI data feature of local data of the receiver meets the AI data feature of the processing requirement of the AI model, and further determine whether to process the second AI model.

In another possible implementation of the technical solution shown in FIG. 3, in step S301, a process in which the first node receives the first information may include: The first node receives the first information based on second information, where the second information indicates transmission information of the AI model. Specifically, the first node may receive, based on the second information, the first information indicating the first AI model, where the second information indicates the transmission information of the AI model, so that the first node can implement transmission of the AI model based on the second information.

Optionally, the transmission information includes at least one of the following:

Information A: node identifier of a node that sends the first AI model, where for the first node, the first AI model comes from the previous-hop node of the first node. Therefore, the information A may also be expressed as a node identifier, an index, a number, or the like of the previous-hop node. In other words, the first node may determine, based on the information A, to receive, from the node corresponding to the node identifier, the first information indicating the first AI model.

Information B: node identifier of a node that receives the second AI model, where for the first node, after the first node determines the second AI model in step S302, the first node may further send indication information (for example, third information mentioned below) indicating the second AI model. Correspondingly, a receiver of the second AI model is a next-hop node of the first node. Therefore, the information B may also be expressed as a node identifier, an index, a number, or the like of the next-hop node. In other words, the first node may determine, based on the information B, to send, to the node corresponding to the node identifier, the indication information indicating the second AI model.

Information C: identifier of an AI task corresponding to the first AI model and/or the second AI model.

Information D: identifier of the first AI model.

Information E: identifier of the second AI model.

Information F: processing manner of processing the first AI model being at least one of training, distillation, and fusion, where in other words, the first node may determine, based on the information F, a processing manner of processing the first AI model in step S302.

Information G: processing manner of processing the second AI model being at least one of training, distillation, and fusion.

Information H: indication information indicating a non-relay node, or indication information indicating a relay node. The first node participates in AI model processing in step S302. Correspondingly, the first node is not a relay node, that is, the first node may determine, based on the information H, that the first node does not function as the relay node. For example, FIG. 4a and FIG. 4b are used as examples. The node 1 determines AI data feature mismatching, but the node 1 may transmit the received AI model to the next-hop node. In this case, for the node 1, the information H determined by the node 1 indicates that the node 1 is a relay node. Correspondingly, the node 1 may transmit the AI model to the next-hop node based on the information H.

Optionally, the transmission information may further include the fourth information and/or the fifth information described above.

In a possible implementation, in the technical solution shown in FIG. 3, the method further includes: The first node sends third information based on the second information, where the third information indicates the second AI model. Specifically, after the first node processes the first AI model based on the local data to obtain the second AI model, the first node may further send, based on the second information, the third information indicating the second AI model, so that a receiver (namely, the next-hop node of the first node) of the third information can further process the second AI model.

It should be noted that, for the first node, the first node may determine the second information in a plurality of manners, which are separately described below.

Implementation example 1: The first node obtains the second information in a manner of receiving the second information.

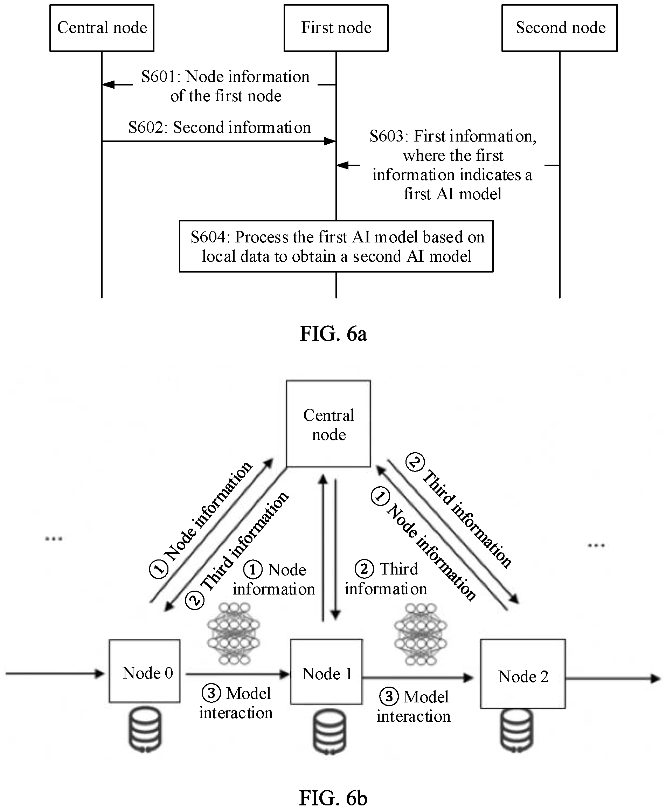

Specifically, in the implementation example 1, the first node may obtain the second information by using an implementation process shown in FIG. 6a. As shown in FIG. 6a, the following steps are included.

S601: The first node sends node information of the first node, and correspondingly, the central node receives the node information of the first node. The node information indicates the AI data feature of the local data of the first node.

S602: The central node sends the second information, and correspondingly, the first node receives the second information. The second information indicates the transmission information of the AI model.

S603: The second node sends the first information, and correspondingly, the first node receives the first information.

S604: The first node processes the first AI model based on the local data to obtain the second AI model.

For implementation processes of step S603 and step S604, refer to the implementation processes of step S301 and step S302.

Based on the technical solution shown in FIG. 6, the first node obtains the second information in step S602 by receiving the second information. To be specific, the first node can determine the second information by using a scheduling indication of another node (for example, the central node), to reduce implementation complexity of the first node.

Optionally, the another node can be used as a central node (or a control node, a management node, or the like) in a learning architecture in which the first node is located, so that the solution can be adapted to a learning architecture having a central node (or a control node, a management node, or the like).

In addition, in the technical solution shown in FIG. 6, before step S603, the second node may also send node information of the second node to the central node (not shown in FIG. 6), so that the central node can determine the second information based on the node information of the first node and the node information of the second node. Correspondingly, the central node may also send, to the second node, transmission information of an AI model transmitted by the second node. In other words, one or more pieces of node information received by the central node indicate AI data features of one or more nodes, and the central node can determine the transmission information of the AI model based on the one or more pieces of node information. Then, the central node may send the second information indicating the transmission information, so that a receiver of the second information can transmit the AI model based on the second information. Therefore, the basis for determining the transmission information of the AI model by the central node includes the AI data features of the one or more nodes, so that a communication node can process an AI model that matches the AI data feature of the local data. Correspondingly, the AI model can also be processed by a node that meets the processing requirement, thereby implementing AI model processing based on AI data feature matching.

As an application example of the implementation example 1, as shown in FIG. 6b, an interaction process of the node 0, the node 1, and the node 2 is still used as an example for description herein. It can be learned from the foregoing descriptions that the first node is a next-hop node of the second node. To be specific, the first node may be the node 1 in FIG. 6b and the second node may be the node 0 in FIG. 6b, or the first node may be the node 2 in FIG. 6b and the second node may be the node 1 in FIG. 6b.

In FIG. 6b, each distributed node (including the node 0, the node 1, and the node 2) sends node information (namely, the node information in FIG. 6a, including the node information of the first node, the node information of the second node, and the like) to the central node in step ①. Then, the central node may send the second information to each distributed node in step ② based on the node information of each distributed node received in step ①. Subsequently, each distributed node may perform model interaction in step ③ based on the second information.

It should be noted that, in FIG. 6b, each distributed node reports an AI data feature of local data, and the central node selects, based on information reported by each distributed node, nodes (for example, the node 0 and the node 2 in FIG. 6b) in which an AI model is located, and determines a model transmission path. When two nodes participating in model processing cannot communicate with each other, a relay node (for example, the node 1 in FIG. 6b) is determined for the two nodes. In other words, in the second information sent by the central node to the node 0 and the node 2, the information H indicates that the node 0 and the node 2 are not relay nodes; and in the second information sent by the central node to the node 1, the information H indicates that the node 1 is a relay node.

It should be understood that the central node may determine, based on the AI data features of the one or more nodes, the transmission information for transmitting the AI model by the one or more nodes. The second information sent by the central node may indicate the transmission information for transmitting the AI model by the one or more nodes. In other words, the second information received by the first node and the second node may be same information. Alternatively, the central node may send one or more pieces of second information, where the one or more pieces of second information respectively indicate transmission information for transmitting the AI model by the one or more nodes. In other words, the second information received by the first node and the second node may be different information. Correspondingly, the receiver of the second information may include the one or more nodes (for example, the one or more nodes may include a first node). The central node may be a central node (or a control node, a management node, or the like) in a learning architecture in which the one or more nodes are located, so that the solution can be adapted to a learning architecture having a central node (or a control node, a management node, or the like).

Implementation example 2: The first node obtains the second information in a manner of determining the second information locally.

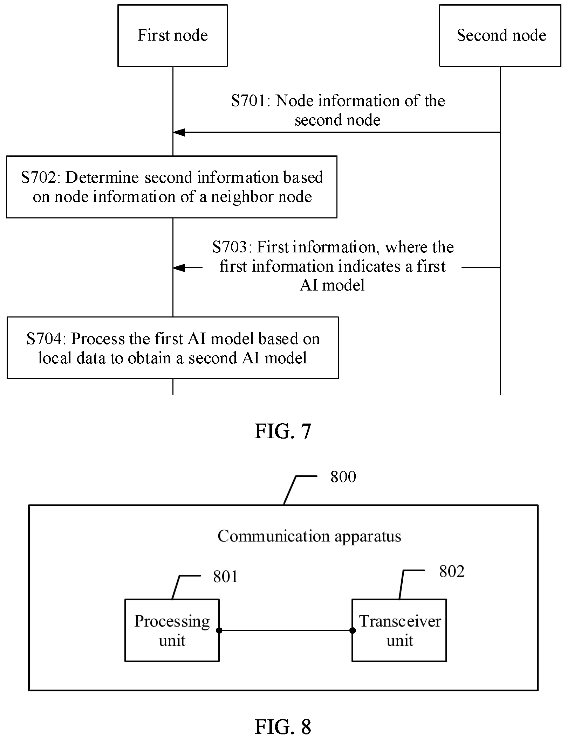

Specifically, in the implementation example 2, the first node may obtain the second information by using an implementation process shown in FIG. 7. As shown in FIG. 7, the following steps are included.

S701: The second node sends node information of the second node, and correspondingly, the first node receives the node information of the second node. The node information indicates an AI data feature of local data of the second node.

S702: The first node determines the second information based on node information of a neighbor node. The second information indicates the transmission information of the AI model. In addition, for the first node, the neighbor node includes at least the second node, that is, before step S702, the first node may further receive information about one or more neighbor nodes, where the information about the one or more neighbor nodes indicates AI data features of the one or more neighbor nodes, and the one or more neighbor nodes include at least the second node. Then, the first node determines the second information in step S702 based on the information about the one or more neighbor nodes.

It should be understood that, in the technical solution shown in FIG. 7, the first node may also send node information of the first node to the second node, and the node information indicates an AI data feature of local data of the first node. In other words, for the second node, the second node may also receive the information about the one or more neighbor nodes, the information about the one or more neighbor nodes indicates the AI data features of the one or more neighbor nodes, and the one or more neighbor nodes include at least the first node. Subsequently, the second node may determine the second information based on the information about the one or more neighbor nodes, so that the second node performs AI model transmission based on the determined second information.

In an implementation example of step S702, the first node may determine, based on the node information of the neighbor node, content shown in Table 2.

Table 2

| Neighbor node ID | AI data feature |
|---|---|
| Neighbor node ID 1 | AI data feature corresponding to an identifier 1 |
| | ... |
| | AI data feature corresponding to an identifier k (k is greater than or equal to 1) |
| ... | |
| Neighbor node ID n (n is greater than or equal to 1) | AI data feature corresponding to the identifier 1 |
| | ... |
| | AI data feature corresponding to an identifier m (m is greater than or equal to 1) |

It should be understood that, in Table 2, a node ID of the second node may be any one of the neighbor node ID 1 to the neighbor node ID 1n. In n nodes corresponding to the neighbor node ID 1 to the neighbor node ID 1n, each neighbor node may have one or more pieces of local data. Correspondingly, node information of each neighbor node received by the first node may include one or more of AI data features corresponding to the one or more pieces of local data (for example, the one or more pieces of local data are in one-to-one correspondence with the one or more of AI data features).

In Table 2, the neighbor node ID 1 may have k pieces of local data, and the k pieces of local data respectively correspond to the AI data feature corresponding to the identifier 1 to the AI data feature corresponding to the identifier k. The neighbor node ID n may have m pieces of local data, and the m pieces of local data respectively correspond to the AI data feature corresponding to the identifier 1 to the AI data feature corresponding to the identifier m. Any identifier in Table 2 (for example, any identifier in the identifier 1 to the identifier k corresponding to the neighbor node ID 1 or any identifier in the identifier 1 to the identifier m corresponding to the neighbor node ID n) may be an identifier of an AI model (for example, the information D and/or the information E), an identifier of a task to which the AI model is applied (for example, the information C), a processing manner corresponding to the AI model (for example, the information F and/or the information G), or the like.

As shown in Table 2, the first node may construct, based on the node information of the neighbor node, a neighbor information table shown in Table 2, to record the AI data feature of the neighbor node. Subsequently, when sending or receiving the AI model, the first node determines the transmission information of the AI model in a table lookup manner. For example, the first node may determine at least one of the information C, the information D, the information E, the information F, and the information G based on any identifier in Table 2. For another example, the first node may determine, based on the AI data feature corresponding to each neighbor node ID in Table 2 and the AI data feature of the local data of the first node, that the first AI model can be received from a corresponding node (that is, determine the information A, namely, the node identifier of the node that sends the first AI model), and that the second AI model can be sent to a corresponding node (that is, determine the information B, namely, the node identifier of the node that receives the second AI model).

Optionally, the first node may determine, based on the node information of the neighbor node, information other than the information included in Table 2, for example, may further include other neighbor node information of the one or more neighbor nodes. For example, the second node is the neighbor node ID 1. The node information sent by the second node to the first node may further include node information of a neighbor node that can communicate with the second node.

For ease of description, an example in which the neighbor node that can communicate with the second node includes the third node is used. In the following example, for example, the third node is not a neighbor node of the first node. In other words, the first node and the third node cannot communicate with each other, and the first node and the third node may communicate with each other through a relay node (for example, the second node). The second node may send node information of the third node to the first node, where the node information of the third node indicates an AI data feature of local data of the third node. Subsequently, for the first node, if the first node determines that AI data features of n neighbor nodes (including the neighbor node ID 1 to the neighbor node ID n in Table 2) of the first node do not match the AI data feature of the first node, the first node may not be able to perform AI model interaction with the n neighbor nodes. Therefore, the first node may participate in AI model interaction based on node information of a neighbor node that can communicate with the n neighbor nodes. For example, the first node may perform AI model interaction with the third node through the second node. In this case, the second node may determine that the second node is the relay node (that is, the information H indicates that the second node is the relay node).

In an implementation example of step S702, the first node may determine, based on the node information of the neighbor node, content shown in Table 3.

Table 3

| AI data feature | Previous-hop node | Next-hop node |
|---|---|---|
| Identifier 1 | Node 1 | Node 2 |
| Identifier 2 | Node 3 | Node 4 |
| | | |
| Identifier k | Node 1 | Node 3 |

As shown in Table 3, the first node may construct, based on the node information of the neighbor node, a model routing table shown in Table 3, to record information about a previous-hop node and a next-hop node of each target AI model. When receiving or sending an AI model, the first node may determine transmission information of the AI model based on Table 3 in a table lookup manner. It should be understood that, for an implementation process in which the first node determines the information A to the information H based on Table 3, refer to the foregoing implementation process in which the first node determines the information A to the information H based on Table 2.

S703: The second node sends the first information, and correspondingly, the first node receives the first information.

S704: The first node processes the first AI model based on the local data, to obtain the second AI model.

For implementation processes of step S703 and step S704, refer to the implementation processes of step S301 and step S302.

Based on the technical solution shown in FIG. 7, the first node may receive the one or more pieces of neighbor node information indicating the AI data features of the one or more neighbor nodes, and determine the second information based on the one or more pieces of neighbor node information, that is, the first node can determine the second information locally based on the received (or collected) one or more pieces of neighbor node information. Optionally, the first node can determine the transmission information of the AI model locally, so that the solution can adapt to a decentralized learning architecture.

Refer to FIG. 8. An embodiment of this application provides a communication apparatus 800. The communication apparatus 800 may implement functions of the first node or the central node (the first node or the central node is a terminal device or a network device) in the foregoing method embodiments, and therefore can also implement beneficial effects of the foregoing method embodiments. In this embodiment of this application, the communication apparatus 800 may be the first node (or the central node), or may be an integrated circuit or an element in the first node (or the central node), for example, a chip. In the following embodiments, an example in which the communication apparatus 800 is the first node (or the central node) is used for description.

It should be noted that a transceiver unit 802 may include a sending unit and a receiving unit, which are respectively configured to perform sending and receiving.

In a possible implementation, when the apparatus 800 is configured to perform the method performed by the first node in any one of the foregoing embodiments, the apparatus 800 includes a processing unit 801 and the transceiver unit 802. The transceiver unit 802 is configured to receive first information, where the first information indicates a first artificial intelligence AI model. The processing unit 801 is configured to process the first AI model based on local data to obtain a second AI model, where an AI data feature of the local data meets an AI data feature corresponding to a processing requirement of the first AI model.

In a possible implementation, that the transceiver unit 802 is configured to receive the first information includes: The transceiver unit 802 is specifically configured to receive the first information based on second information, where the second information indicates transmission information of an AI model.

In a possible implementation, the transceiver unit 802 is further configured to receive the second information.

In a possible implementation, the transceiver unit 802 is further configured to receive one or more pieces of neighbor node information, where the one or more pieces of neighbor node information indicate AI data features of one or more neighbor nodes; and the processing unit 801 is further configured to determine the second information based on the one or more pieces of neighbor node information.

In a possible implementation, the transceiver unit 802 is further configured to send third information based on the second information, and the third information indicates the second AI model.

In a possible implementation, the transceiver unit 802 is further configured to send fourth information and/or fifth information, where the fourth information indicates the AI data feature corresponding to the processing requirement of the first AI model, and the fifth information indicates an AI data feature corresponding to a processing requirement of the second AI model.

In a possible implementation, the transmission information includes at least one of the following:

a node identifier of a node that sends a first AI model;
a node identifier of a node that receives a second AI model;
an identifier of an AI task corresponding to the first AI model and/or an identifier of an AI task corresponding to the second AI model;
an identifier of the first AI model;
an identifier of the second AI model;
a processing manner of processing the first AI model being at least one of training, distillation, and fusion;
a processing manner of processing the second AI model being at least one of training, distillation, and fusion; and
indication information indicating a non-relay node.

In a possible implementation, the transceiver unit 802 is further configured to receive the fourth information, and the fourth information indicates the AI data feature corresponding to the processing requirement of the first AI model.

In a possible implementation, the AI data feature includes at least one of the following: an AI task to which AI data is applied, an object to which the AI data belongs, geographical location information of collecting the AI data, time information of collecting the AI data, and a quantity of samples of the AI data.

In a possible implementation, the transceiver unit 802 is further configured to send indication information indicating the AI data feature of the local data.

In a possible implementation, that the processing unit 801 is configured to process the first AI model based on the local data to obtain the second AI model includes: The processing unit 801 is specifically configured to perform at least one of training, distillation, and fusion on the first AI model based on the local data, to obtain the second AI model.

In a possible implementation, when the apparatus 800 is configured to perform the method performed by the central node in any one of the foregoing embodiments, the apparatus 800 includes a processing unit 801 and a transceiver unit 802. The transceiver unit 802 is configured to receive one or more pieces of node information, where the one or more pieces of node information indicate AI data features of one or more nodes, and the one or more pieces of node information are used to determine transmission information of an AI model. The processing unit 801 is configured to determine second information, where the second information indicates the transmission information. The transceiver unit 802 is further configured to send the second information.

In a possible implementation, the transmission information includes at least one of the following:

a node identifier of a node that sends a first AI model;
a node identifier of a node that receives a second AI model;
an identifier of an AI task corresponding to the first AI model and/or an identifier of an AI task corresponding to the second AI model;
an identifier of the first AI model;
an identifier of the second AI model;
a processing manner of processing the first AI model being at least one of training, distillation, and fusion;
a processing manner of processing the second AI model being at least one of training, distillation, and fusion; and
indication information indicating a non-relay node.

In a possible implementation, the AI data feature includes at least one of the following: an AI task to which AI data is applied, an object to which the AI data belongs, geographical location information of collecting the AI data, time information of collecting the AI data, and a quantity of samples of the AI data.

It should be noted that, for details about content such as information execution processes of the units of the communication apparatus 800, refer to the descriptions in the foregoing method embodiments of this application. Details are not described herein again.

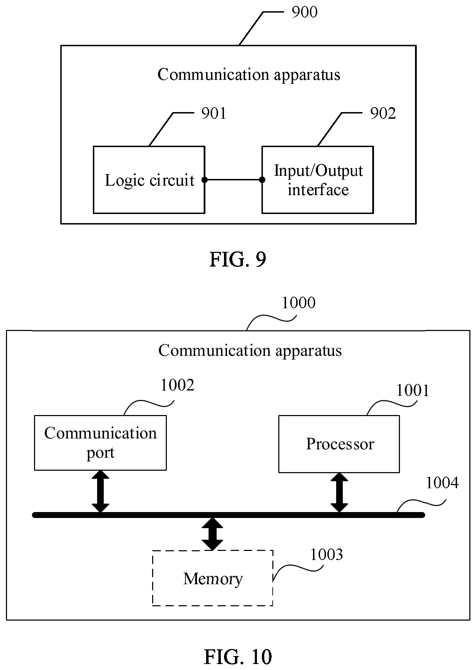

FIG. 9 is a diagram of another structure of a communication apparatus 900 according to this application. The communication apparatus 900 includes a logic circuit 901 and an input/output interface 902. The communication apparatus 900 may be a chip or an integrated circuit.

The transceiver unit 802 shown in FIG. 8 may be a communication interface. The communication interface may be the input/output interface 902 in FIG. 9, and the input/output interface 902 may include an input interface and an output interface. Alternatively, the communication interface may be a transceiver circuit, and the transceiver circuit may include an input interface circuit and an output interface circuit.

Optionally, the input/output interface 902 is configured to receive first information, where the first information indicates a first artificial intelligence AI model. The logic circuit 901 is configured to process the first AI model based on local data to obtain a second AI model, where an AI data feature of the local data meets an AI data feature corresponding to a processing requirement of the first AI model.

Optionally, the input/output interface 902 is configured to receive one or more pieces of node information, where the one or more pieces of node information indicate AI data features of one or more nodes, and the one or more pieces of node information are used to determine transmission information of an AI model; the logic circuit 901 is configured to determine second information, where the second information indicates the transmission information; and the input/output interface 902 is further configured to send the second information.

The logic circuit 901 and the input/output interface 902 may further perform other steps performed by the first node or the central node in any one of embodiments, and achieve corresponding beneficial effects. Details are not described herein again.

In a possible implementation, the processing unit 801 shown in FIG. 8 may be the logic circuit 901 in FIG. 9.

Optionally, the logic circuit 901 may be a processing apparatus, and some or all functions of the processing apparatus may be implemented by using software. Some or all functions of the processing apparatus may be implemented by using software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may include only a processor. A memory configured to store a computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips or one or more integrated circuits. For example, the processing apparatus may be one or more of a field-programmable gate array (field-programmable gate array, FPGA), an application-specific integrated circuit (application-specific integrated circuit, ASIC), a system on a chip (system on a chip, SoC), a central processing unit (central processing unit, CPU), a network processor (network processor, NP), a digital signal processor (digital signal processor, DSP), a microcontroller unit (microcontroller unit, MCU), a programmable logic device (programmable logic device, PLD), another integrated chip, or any combination of the foregoing chips or processors.

FIG. 10 shows a communication apparatus 1000 used in the foregoing embodiments according to an embodiment of this application. The communication apparatus 1000 may be specifically a communication apparatus serving as a terminal device in the foregoing embodiments. In the example shown in FIG. 10, the terminal device is implemented by using a terminal device (or a component in a terminal device).

In a diagram of a possible logical structure of the communication apparatus 1000, the communication apparatus 1000 may include but is not limited to at least one processor 1001 and a communication port 1002.

The transceiver unit 802 shown in FIG. 8 may be a communication interface. The communication interface may be the communication port 1002 in FIG. 10. The communication port 1002 may include an input interface and an output interface. Alternatively, the communication port 1002 may be a transceiver circuit, and the transceiver circuit may include an input interface circuit and an output interface circuit.

Further optionally, the apparatus may include at least one of a memory 1003 and a bus 1004. In this embodiment of this application, the at least one processor 1001 is configured to control an action of the communication apparatus 1000.

In addition, the processor 1001 may be a central processing unit, a general-purpose processor, a digital signal processor, an application-specific integrated circuit, a field-programmable gate array or another programmable logic device, a transistor logic device, a hardware component, or any combination thereof. The processor may implement or execute various example logical blocks, modules, and circuits described based on content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing system, apparatus, and unit, refer to a corresponding process in the foregoing method embodiments, and details are not described herein again.

It should be noted that the communication apparatus 1000 shown in FIG. 10 may be specifically configured to implement the steps implemented by the terminal device in the foregoing method embodiments, and achieve the technical effects corresponding to the terminal device. For a specific implementation of the communication apparatus shown in FIG. 10, refer to the descriptions in the foregoing method embodiments. Details are not described herein again.

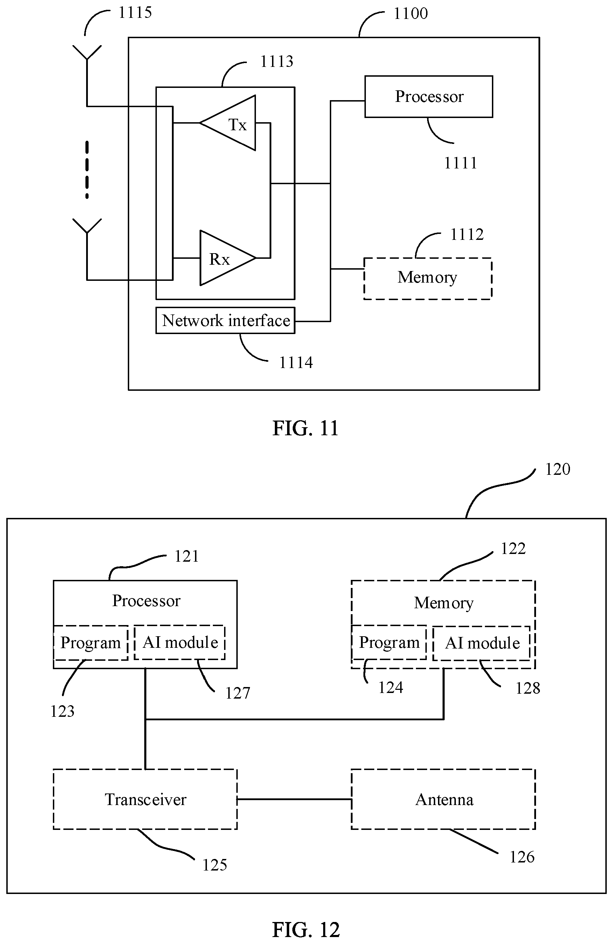

FIG. 11 is a diagram of a structure of a communication apparatus 1100 in the foregoing embodiments according to an embodiment of this application. The communication apparatus 1100 may be specifically the communication apparatus serving as the network device in the foregoing embodiment. In the example shown in FIG. 11, the network device is implemented as a network device (or a component in a network device). For a structure of the communication apparatus, refer to the structure shown in FIG. 11.

The communication apparatus 1100 includes at least one processor 1111 and at least one network interface 1114. Further optionally, the communication apparatus includes at least one memory 1112, at least one transceiver 1113, and one or more antennas 1115. The processor 1111, the memory 1112, the transceiver 1113, and the network interface 1114 are connected, for example, connected through a bus. In this embodiment of this application, the connection may include various interfaces, transmission lines, buses, or the like. This is not limited in this embodiment. The antenna 1115 is connected to the transceiver 1113. The network interface 1114 is configured to enable the communication apparatus to communicate with another communication device through a communication link. For example, the network interface 1114 may include a network interface between the communication apparatus and a core network device, for example, an S1 interface. The network interface may include a network interface between the communication apparatus and another communication apparatus (for example, another network device or core network device), for example, an X2 or Xn interface.

The transceiver unit 802 shown in FIG. 8 may be a communication interface. The communication interface may be the network interface 1114 in FIG. 11. The network interface 1114 may include an input interface and an output interface. Alternatively, the network interface 1114 may be a transceiver circuit, and the transceiver circuit may include an input interface circuit and an output interface circuit.

The processor 1111 is mainly configured to process a communication protocol and communication data; control the entire communication apparatus, execute a software program, and process data of the software program, for example, is configured to support the communication apparatus in performing actions described in embodiments. The communication apparatus may include a baseband processor and a central processing unit. The baseband processor is mainly configured to process the communication protocol and the communication data. The central processing unit is mainly configured to control an entire terminal device, execute the software program, and process the data of the software program. Functions of the baseband processor and the central processing unit may be integrated into the processor 1111 in FIG. 11. A person skilled in the art can understand that the baseband processor and the central processing unit may alternatively be processors independent of each other, and are interconnected through a technology like a bus. A person skilled in the art may understand that the terminal device may include a plurality of baseband processors to adapt to different network standards, and the terminal device may include a plurality of central processing units to enhance processing capabilities of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and data. The memory 1112 may exist independently, and is connected to the processor 1111. Optionally, the memory 1112 and the processor 1111 may be integrated together, for example, integrated into one chip. The memory 1112 can store program code for performing the technical solutions in embodiments of this application, and execution of the program code is controlled by the processor 1111. Various types of executed computer program code may also be considered as a driver of the processor 1111.

FIG. 11 shows only one memory and one processor. In an actual terminal device, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in embodiments of this application.

The transceiver 1113 may be configured to support receiving or sending of a radio frequency signal between the communication apparatus and a terminal. The transceiver 1113 may be connected to the antenna 1115. The transceiver 1113 includes a transmitter Tx and a receiver Rx. Specifically, the one or more antennas 1115 may receive a radio frequency signal. The receiver Rx of the transceiver 1113 is configured to receive the radio frequency signal from the antenna, convert the radio frequency signal into a digital baseband signal or a digital intermediate frequency signal, and provide the digital baseband signal or the digital intermediate frequency signal for the processor 1111, so that the processor 1111 further processes the digital baseband signal or the digital intermediate frequency signal, for example, performs demodulation and decoding. In addition, the transmitter Tx of the transceiver 1113 is further configured to receive a modulated digital baseband signal or digital intermediate frequency signal from the processor 1111, convert the modulated digital baseband signal or digital intermediate frequency signal into a radio frequency signal, and send the radio frequency signal through the one or more antennas 1115. Specifically, the receiver Rx may selectively perform one-level or multi-level down mixing processing and analog-to-digital conversion processing on the radio frequency signal, to obtain the digital baseband signal or the digital intermediate frequency signal. A sequence of the down mixing processing and the analog-to-digital conversion processing may be adjusted. The transmitter Tx may selectively perform one-level or multi-level up mixing processing and digital-to-analog conversion processing on the modulated digital baseband signal or digital intermediate frequency signal, to obtain the radio frequency signal. A sequence of the up mixing processing and the digital-to-analog conversion processing may be adjusted. The digital baseband signal and the digital intermediate frequency signal may be collectively referred to as a digital signal.

The transceiver 1113 may also be referred to as a transceiver unit, a transceiver device, a transceiver apparatus, or the like. Optionally, a component that is in the transceiver unit and that is configured to implement a receiving function may be considered as a receiving unit, and a component that is in the transceiver unit and that is configured to implement a sending function may be considered as a sending unit. In other words, the transceiver unit includes a receiving unit and a sending unit. The receiving unit may also be referred to as a receiver, an input interface, a receiver circuit, or the like. The sending unit may be referred to as a transmitter, a transmitter machine, a transmitter circuit, or the like.

It should be noted that the communication apparatus 1100 shown in FIG. 11 may be specifically configured to implement steps implemented by the network device in the foregoing method embodiments, and achieve the technical effects corresponding to the network device. For a specific implementation of the communication apparatus 1100 shown in FIG. 11, refer to the descriptions in the foregoing method embodiments. Details are not described herein again.

FIG. 12 is a diagram of a structure of a communication apparatus in the foregoing embodiments according to an embodiment of this application.

It may be understood that the communication apparatus 120 includes, for example, modules, units, elements, circuits, or interfaces, which are appropriately configured together to perform the technical solutions provided in this application. The communication apparatus 120 may be the RAN node, the terminal, the core network device, or another network device described above, or may be a component (for example, a chip) in these devices, to implement a method described in the following method embodiments. The communication apparatus 120 includes one or more processors 121. The processor 121 may be a general-purpose processor, a dedicated processor, or the like. For example, the processor may be a baseband processor or a central processing unit. The baseband processor may be configured to process a communication protocol and communication data. The central processing unit may be configured to: control the communication apparatus (for example, a RAN node, a terminal, or a chip), execute a software program, and process data of the software program.

Optionally, in a design, the processor 121 may include a program 123 (which may also be referred to as code or instructions sometimes). The program 123 may be run on the processor 121, so that the communication apparatus 120 performs the method described in the foregoing embodiments. In another possible design, the communication apparatus 120 includes a circuit (not shown in FIG. 12).

Optionally, the communication apparatus 120 may include one or more memories 122 storing a program 124 (which may also be referred to as code or instructions sometimes). The program 124 may be run on the processor 121, so that the communication apparatus 120 performs the method described in the foregoing method embodiments.

Optionally, the processor 121 and/or the memory 122 may include AI modules 127 and 128, and the AI module is configured to implement an AI-related function. The AI module may be implemented by software, hardware, or a combination of software and hardware. For example, the AI module may include a radio intelligence control (radio intelligence control, RIC) module. For example, the AI module may be a near-real-time RIC or a non-real-time RIC.

Optionally, the processor 121 and/or the memory 122 may further store data. The processor and the memory may be separately disposed, or may be integrated together.

Optionally, the communication apparatus 120 may further include a transceiver 125 and/or an antenna 126. The processor 121 may also be referred to as a processing unit sometimes, and controls the communication apparatus (for example, the RAN node or the terminal). The transceiver 125 may also be referred to as a transceiver unit, a transceiver machine, a transceiver circuit, a transceiver, or the like sometimes, and is configured to implement a transceiver function of the communication apparatus through the antenna 126.

The transceiver unit 802 shown in FIG. 8 may be a communication interface. The communication interface may be the transceiver 125 in FIG. 12. The transceiver 125 may include an input interface and an output interface. Alternatively, the transceiver 125 may be a transceiver circuit, and the transceiver circuit may include an input interface circuit and an output interface circuit.

An embodiment of this application further provides a computer-readable storage medium. The storage medium is configured to store one or more computer-executable instructions. When the computer-executable instructions are executed by a processor, the processor performs the method according to the possible implementations of the first node or the central node in the foregoing embodiments.

An embodiment of this application further provides a computer program product (or referred to as a computer program). When the computer program product is executed by a processor, the processor performs the method according to the possible implementations of the first node or the central node.

An embodiment of this application further provides a chip system. The chip system includes at least one processor, configured to support a communication apparatus in implementing functions in the foregoing possible implementations of the communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete device. The communication apparatus may be specifically the first node or the central node in the foregoing method embodiments.

An embodiment of this application further provides a communication system. The communication system includes the first node and the second node in any one of the foregoing embodiments. The first node may be a terminal device or a network device, and the second node may also be a terminal device or a network device.

Optionally, the communication system may further include a central node, and the central node may also be a terminal device or a network device.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electronic, mechanical, or other similar forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, all functional units in embodiments of this application may be integrated into one processing unit, or each of the units may exist alone physically, or two or more units are integrated into one unit. The integrated unit may be implemented in a form of hardware, or may be implemented in a form of a software functional unit. When the integrated unit is implemented in the form of the software functional unit and sold or used as an independent product, the integrated unit may be stored in a computer-readable storage medium. Based on such an understanding, the technical solutions of this application essentially, or the part making a contribution, or all or a part of the technical solutions may be implemented in a form of a software product. The computer software product is stored in a storage medium and includes several instructions for instructing a computer device (which may be a personal computer, a server, a network device, or the like) to perform all or a part of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

**Claims**

1.  A communication method, comprising:

    receiving first information, wherein the first information indicates a first artificial intelligence AI model; and
    processing the first AI model based on local data to obtain a second AI model, wherein an AI data feature of the local data meets an AI data feature corresponding to a processing requirement of the first AI model.

2.  The method according to claim 1, wherein receiving the first information comprises:
    receiving the first information based on second information, wherein the second information indicates transmission information of an AI model.

3.  The method according to claim 2, wherein the method further comprises:
    receiving the second information.

4.  The method according to claim 2, wherein the method further comprises:

    receiving one or more pieces of neighbor node information, wherein the one or more pieces of neighbor node information indicate AI data features of one or more neighbor nodes; and
    determining the second information based on the one or more pieces of neighbor node information.

5.  The method according to any one of claims 2 to 4, wherein the method further comprises:
    sending third information based on the second information, wherein the third information indicates the second AI model.

6. The method according to claim 5, wherein the method further comprises:
sending fourth information and/or fifth information, wherein the fourth information indicates the AI data feature corresponding to the processing requirement of the first AI model, and the fifth information indicates an AI data feature corresponding to a processing requirement of the second AI model.

7. The method according to any one of claims 2 to 5, wherein the transmission information comprises at least one of the following:

> a node identifier of a node that sends the first AI model;
> a node identifier of a node that receives the second AI model;
> an identifier of an AI task corresponding to the first AI model and/or an identifier of an AI task corresponding to the second AI model;
> an identifier of the first AI model;
> an identifier of the second AI model;
> a processing manner of processing the first AI model being at least one of training, distillation, and fusion;
> a processing manner of processing the second AI model being at least one of training, distillation, and fusion; and
> indication information indicating a non-relay node.

8. The method according to any one of claims 1 to 7, wherein before processing the first AI model based on the local data, the method further comprises:
receiving the fourth information, wherein the fourth information indicates the AI data feature corresponding to the processing requirement of the first AI model.

9. The method according to any one of claims 1 to 8, wherein the AI data feature comprises at least one of the following:
an AI task to which AI data is applied, an object to which the AI data belongs, geographical location information of collecting the AI data, time information of collecting the AI data, and a quantity of samples of the AI data.

10. The method according to any one of claims 1 to 9, wherein the method further comprises:
sending indication information indicating the AI data feature of the local data.

11. The method according to any one of claims 1 to 10, wherein processing the first AI model based on the local data to obtain the second AI model comprises:
performing at least one of training, distillation, and fusion on the first AI model based on the local data, to obtain the second AI model.

12. A communication method, comprising:

> receiving one or more pieces of node information, wherein the one or more pieces of node information indicate AI data features of one or more nodes, and the one or more pieces of node information are used to determine transmission information of an AI model; and
> sending second information, wherein the second information indicates the transmission information.

13. The method according to claim 12, wherein the transmission information comprises at least one of the following:

> a node identifier of a node that sends the first AI model;
> a node identifier of a node that receives the second AI model;
> an identifier of an AI task corresponding to the first AI model and/or an identifier of an AI task corresponding to the second AI model;
> an identifier of the first AI model;
> an identifier of the second AI model;
> a processing manner of processing the first AI model being at least one of training, distillation, and fusion;
> a processing manner of processing the second AI model being at least one of training, distillation, and fusion; and
> indication information indicating a non-relay node.

14. The method according to claim 12 or 13, wherein the AI data feature comprises at least one of the following:
an AI task to which AI data is applied, an object to which the AI data belongs, geographical location information of collecting the AI data, time information of collecting the AI data, and a quantity of samples of the AI data.

15. A communication apparatus, comprising a transceiver unit and a processing unit, wherein

the transceiver unit is configured to receive first information, wherein the first information indicates a first artificial intelligence AI model; and

the processing unit is configured to process the first AI model based on local data to obtain a second AI model, wherein an AI data feature of the local data meets an AI data feature corresponding to a processing requirement of the first AI model.

16. The apparatus according to claim 15, wherein that the transceiver unit is configured to receive the first information comprises:
the transceiver unit is specifically configured to receive the first information based on second information, wherein the second information indicates transmission information of an AI model.

17. The apparatus according to claim 16, wherein the transceiver unit is further configured to receive the second information.

18. The apparatus according to claim 16, wherein

the transceiver unit is further configured to receive one or more pieces of neighbor node information, wherein the one or more pieces of neighbor node information indicate AI data features of one or more neighbor nodes; and

the processing unit is further configured to determine the second information based on the one or more pieces of neighbor node information.

19. The apparatus according to any one of claims 16 to 18, wherein the transceiver unit is further configured to send third information based on the second information, and the third information indicates the second AI model.

20. The apparatus according to claim 19, wherein the transceiver unit is further configured to send fourth information and/or fifth information, the fourth information indicates the AI data feature corresponding to the processing requirement of the first AI model, and the fifth information indicates an AI data feature corresponding to a processing requirement of the second AI model.

21. The apparatus according to any one of claims 16 to 20, wherein the transmission information comprises at least one of the following:

a node identifier of a node that sends the first AI model;
a node identifier of a node that receives the second AI model;
an identifier of an AI task corresponding to the first AI model and/or an identifier of an AI task corresponding to the second AI model;
an identifier of the first AI model;
an identifier of the second AI model;
a processing manner of processing the first AI model being at least one of training, distillation, and fusion;
a processing manner of processing the second AI model being at least one of training, distillation, and fusion; and
indication information indicating a non-relay node.

22. The apparatus according to any one of claims 16 to 21, wherein the transceiver unit is further configured to receive the fourth information, and the fourth information indicates the AI data feature corresponding to the processing requirement of the first AI model.

23. The apparatus according to any one of claims 16 to 22, wherein the AI data feature comprises at least one of the following:
an AI task to which AI data is applied, an object to which the AI data belongs, geographical location information of collecting the AI data, time information of collecting the AI data, and a quantity of samples of the AI data.

24. The apparatus according to any one of claims 16 to 23, wherein the transceiver unit is further configured to send indication information indicating the AI data feature of the local data.

25. The apparatus according to any one of claims 16 to 24, wherein that the processing unit is configured to process the first AI model based on the local data to obtain the second AI model comprises:

the processing unit is specifically configured to perform at least one of training, distillation, and fusion on the first AI model based on the local data, to obtain the second AI model.

26. A communication apparatus, comprising a transceiver unit and a processing unit, wherein

the transceiver unit is configured to receive one or more pieces of node information, wherein the one or more pieces of node information indicate AI data features of one or more nodes, and the one or more pieces of node information are used to determine transmission information of an AI model;

the processing unit is configured to determine second information, wherein the second information indicates the transmission information; and

the transceiver unit is further configured to send the second information.

27. The apparatus according to claim 26, wherein the transmission information comprises at least one of the following:

a node identifier of a node that sends the first AI model;

a node identifier of a node that receives the second AI model;

an identifier of an AI task corresponding to the first AI model and/or an identifier of an AI task corresponding to the second AI model;

an identifier of the first AI model;

an identifier of the second AI model;

a processing manner of processing the first AI model being at least one of training, distillation, and fusion;

a processing manner of processing the second AI model being at least one of training, distillation, and fusion; and

indication information indicating a non-relay node.

28. The apparatus according to claim 26 or 27, wherein the AI data feature comprises at least one of the following: an AI task to which AI data is applied, an object to which the AI data belongs, geographical location information of collecting the AI data, time information of collecting the AI data, and a quantity of samples of the AI data.

29. A communication apparatus, comprising at least one processor, wherein the at least one processor is coupled to a memory, and the at least one processor is configured to perform the method according to any one of claims 1 to 14.

30. The communication apparatus according to claim 29, wherein the communication apparatus is a chip or a chip system.

31. A readable storage medium, wherein the storage medium stores a computer program or instructions; and when the computer program or the instructions are executed by a communication apparatus, the method according to any one of claims 1 to 14 is implemented.

32. A computer program product, comprising instructions, wherein when the instructions are run on a computer, the computer is enabled to perform the method according to any one of claims 1 to 14.

FIG. 1a

FIG. 1b

Television

Mobile
phone

FIG. 1c

$$w_0 x_0$$

Neuron

$$w_1 x_1$$

$$y = f\left(\sum_{i=0}^{n} w_i x_i + b\right)$$

$$y$$

$$w_n x_n$$

FIG. 1d

FIG. 1e

FIG. 2a

**FIG. 2b**

**FIG. 2c**

FIG. 2d

FIG. 2e

| First node | | Second node |
|---|---|---|

S301: First information, where the first
information indicates a first AI model

S302: Process the first AI model based on
local data to obtain a second AI model

**FIG. 3**

Model
processing

AI data feature
matching

Model
transfer

Node 0

AI data feature
mismatching

Model
transfer

Node 1

Model
processing

AI data feature
matching

Node 2

AI data of a task 1          AI data of a task 2          AI data of the task 1

**FIG. 4a**

FIG. 4b

FIG. 5

**FIG. 6a**

**FIG. 6b**

First node

Second node

S701: Node information of the
second node

S702: Determine second information based
on node information of a neighbor node

S703: First information, where the
first information indicates a first
AI model

S704: Process the first AI model based on
local data to obtain a second AI model

FIG. 7

800

Communication apparatus

801

Processing
unit

802

Transceiver
unit

FIG. 8

900

Communication apparatus

901

Logic circuit

902

Input/Output interface

FIG. 9

1000

Communication apparatus

1002

Communication port

1001

Processor

1004

1003

Memory

FIG. 10

FIG. 11

FIG. 12

## INTERNATIONAL SEARCH REPORT

| International application No. |
|---|
| **PCT/CN2023/120013** |

| A. | CLASSIFICATION OF SUBJECT MATTER |
|---|---|
| | H04W24/02(2009.01)i |

According to International Patent Classification (IPC) or to both national classification and IPC

| B. | FIELDS SEARCHED |
|---|---|

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI; 3GPP: 人工智能, 机器学习, 神经网络, 配置, 设置, 信息, 发送, 终端, 设备, 节点, 数据特征, AI, neutral network, Artificial Intelligence Machine, receiving, configuration, terminal, mobile, phone

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 114143799 A (HUAWEI TECHNOLOGIES CO., LTD.) 04 March 2022 (2022-03-04) description, paragraphs [0004]-[0074], [0117]-[0130], and [0377]-[0393] | 1-32 |
| X | CN 114091679 A (HUAWEI TECHNOLOGIES CO., LTD.) 25 February 2022 (2022-02-25) description, paragraphs [0005]-[0126] | 1-32 |
| A | CN 116419354 A (HUAWEI TECHNOLOGIES CO., LTD.) 11 July 2023 (2023-07-11) entire document | 1-16 |
| A | US 2020367264 A1 (NTT DOCOMO, INC.) 19 November 2020 (2020-11-19) entire document | 1-32 |

| ☐ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **19 April 2024** | **23 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/120013**

| Patent document cited in search report | | | Publication date (day/month/year) | Patent family member(s) | | | Publication date (day/month/year) |
|---|---|---|---|---|---|---|---|
| CN | 114143799 | A | 04 March 2022 | None | | | |
| CN | 114091679 | A | 25 February 2022 | WO | 2022041947 | A1 | 03 March 2022 |
| CN | 116419354 | A | 11 July 2023 | WO | 2023125721 | A1 | 06 July 2023 |
| US | 2020367264 | A1 | 19 November 2020 | US | 11324018 | B2 | 03 May 2022 |
| | | | | JP | 2020191635 | A | 26 November 2020 |

Form PCT/ISA/210 (patent family annex) (July 2022)